# EUROPEAN PATENT APPLICATION

(11) **EP 4 842 112 A1**
(43) Date of publication of application: **18.11.2026**
(21) Application number: 24920904.0
(22) Date of filing: 31.01.2024
(51) Int. Cl.: H04W 72/1273

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Aldridge, Henry Alexander
(86) International application number: PCT/CN2024/075059
(87) International publication number: WO 2025/160835

(57) **Abstract**

A wireless communication method, a terminal device, and a network device are provided in the disclosure. The wireless communication method includes the following. The terminal device receives, on a first cell, a first downlink (DL) channel or signal sent by the network device. The disclosure enables the terminal device to receive a synchronization signal/physical broadcast channel (PBCH) block (SSB) on a secondary cell (SCell) of the terminal device.

## Description

### TECHNICAL FIELD

This application relates to the field of communication technology, and in particular, to a wireless communication method, a terminal device, and a network device.

### BACKGROUND

Network energy saving is of great significance for environmental sustainability, reducing impact on environment, saving operational expenditure (OPEX), etc. To achieve network energy saving, a network device may not transmit downlink (DL) channels or signals on some cells for a terminal device. However, in some cases, the terminal device needs to receive one or more DL channels or signals on some cells to achieve normal communication. How to ensure that the terminal device receives the DL channels or signals in these cells is a technical problem to be solved.

### SUMMARY

A wireless communication method, a terminal device, and a network device are provided in embodiments of the disclosure, which enables the terminal device to receive, on a first cell, a first downlink (DL) channel or signal.

A wireless communication method is provided in embodiments of the disclosure. The method includes the following. A terminal device receives, on a first cell, a first DL channel or signal sent by a network device.

A wireless communication method is provided in embodiments of the disclosure. The method includes the following. A network device sends, on a first cell, a first DL channel or signal to a terminal device.

A terminal device is provided in embodiments of the disclosure. The terminal device includes a first transceiver module configured to receive, on a first cell, a first DL channel or signal sent by a network device.

A network device is provided in embodiments of the disclosure. The network device includes a second transceiver module configured to send, on a first cell, a first DL channel or signal to a terminal device.

A terminal device is provided in embodiments of the disclosure. The terminal device includes a transceiver, a processor, and a memory. The memory is configured to store computer programs. The transceiver is configured to communicate with other devices. The processor is configured to invoke and execute the computer programs stored in the memory, to cause the terminal device to perform the wireless communication methods.

A network device is provided in embodiments of the disclosure. The network device includes a transceiver, a processor, and a memory. The memory is configured to store computer programs. The transceiver is configured to communicate with other devices. The processor is configured to invoke and execute the computer programs stored in the memory, to cause the network device to perform the wireless communication methods.

A chip is provided in embodiments of the disclosure. The chip is configured to implement the above wireless communication methods.

Specifically, the chip includes a processor configured to invoke and execute computer programs stored in a memory, to cause a device equipped with the chip to perform the wireless communication methods.

A computer-readable storage medium is provided in embodiments of the disclosure. The computer-readable storage medium is configured to store computer programs. The computer programs, when executed by a device, are operable with the device to perform the wireless communication methods.

A computer program product is provided in embodiments of the disclosure. The computer program product includes computer program instructions. The computer program instructions are operable with a computer to perform the wireless communication methods.

A computer program is provided in embodiments of the disclosure. The computer program, when executed on a computer, is operable with the computer to perform the wireless communication methods.

With the wireless communication methods provided by embodiments of the disclosure, it can be ensured that the terminal device receives the first DL channel or signal on the first cell.

### BRIEF DESCRIPTION OF THE DRAWINGS

FIG. 1A is a schematic architectural diagram of a communication system provided by embodiments of the disclosure.
FIG. 1B is a schematic architectural diagram of another communication system provided by embodiments of the disclosure.
FIG. 1C is a schematic architectural diagram of another communication system provided by embodiments of the disclosure.
FIG. 2 is a schematic flow chart of a wireless communication method 200 according to an embodiment of the disclosure.
FIG. 3A is a first schematic diagram of a first medium access control - control element (MAC CE) format according to an embodiment of the disclosure.
FIG. 3B is a second schematic diagram of a first MAC CE format according to an embodiment of the disclosure.
FIG. 4A is a first schematic diagram of a second MAC CE format according to an embodiment of the disclosure.
FIG. 4B is a second schematic diagram of a second MAC CE format according to an embodiment of the disclosure.
FIG. 5A is a first schematic diagram of a third MAC CE format according to an embodiment of the disclosure.
FIG. 5B is a second schematic diagram of a third MAC CE format according to an embodiment of the disclosure.
FIG. 6 is a schematic diagram of a wireless communication method of Solution 1 according to embodiments of the disclosure.
FIG. 7 is a schematic diagram of a wireless communication method of Solution 2 according to embodiments of the disclosure.
FIG. 8 is a schematic diagram of a wireless communication method of Solution 3 according to embodiments of the disclosure.
FIG. 9 is a schematic flow chart of a wireless communication method 900 according to an embodiment of the disclosure.
FIG. 10 is a schematic block diagram of a terminal device 1000 according to an embodiment of the disclosure.
FIG. 11 is a schematic block diagram of a terminal device 1100 according to an embodiment of the disclosure.
FIG. 12 is a schematic block diagram of a network device 1200 according to an embodiment of the disclosure.
FIG. 13 is a schematic structural diagram of a communication device 1300 according to embodiments of the disclosure.
FIG. 14 is a schematic structural diagram of a chip 1400 according to embodiments of the disclosure.
FIG. 15 is a schematic block diagram of a communication system 1500 according to embodiments of the disclosure.

### DETAILED DESCRIPTION

The technical solutions of embodiments of the disclosure will be described below with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi) system, a fifth-generation (5G) communication system, or other communication systems, etc.

Generally, a conventional communication system supports a limited quantity (number) of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure may also be applied to these communication systems.

In one implementation, the communication system in embodiments of the disclosure may be applied to a carrier aggregation (CA) scenario, or may be applied to a dual connectivity (DC) scenario, or may be applied to a standalone (SA) network deployment scenario.

In one implementation, the communication system in embodiments of the disclosure is applicable to an unlicensed spectrum, and the unlicensed spectrum may also be regarded as a shared spectrum; or, the communication system in embodiments of the disclosure is applicable to a licensed spectrum, and the licensed spectrum may also be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a mobile console, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA) device, a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be referred to as a wearable smart device, which is a general term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device. The network device may be an access point (AP) in a WLAN, an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell herein may include: a metro cell, a micro cell, a pico cell, a femto cell, and the like. These small cells are characterized by small coverage and low transmission power and are adapted to provide data transmission service with high-rate.

It may be understood that, in embodiments of the disclosure, a device with communication functions in a network/system may be referred to as a "communication device". The communication device may include a network device and a terminal device with communication functions. The network device and the terminal device may be specific devices in embodiments of the disclosure, which will not be repeated herein. The communication device may further include other devices, such as a network controller, a mobility management entity, or other network entities in the communication system, and embodiments of the disclosure are not limited in this regard.

It may be understood that, the terms "system" and "network" herein are often used interchangeably throughout the disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that that there is an association relationship between *A* and *B*.

In the elaboration of embodiments of the disclosure, the term "correspondence" may mean that there is a direct or indirect correspondence between the two, may mean that there is an association between the two, or may mean a relationship of indicating and indicated or configuring and configured, etc.

For ease of understanding the technical solutions of embodiments of the disclosure, the related art of embodiments of the disclosure will be described below. The following related art as an optional scheme may be arbitrarily combined with the technical solutions of embodiments of the disclosure, which shall all fall within the protection scope of embodiments of the disclosure.

### I. Network Scenario

Communication system scenarios include a terrestrial network (TN) and a non-terrestrial network (NTN). The NTN generally provides communication services for ground users through satellite communication. Current NTN systems include an NR-based NTN (NR-NTN) system and an internet of things (IoT)-based NTN (IoT-NTN) system, and may further include other NTN systems in the future.

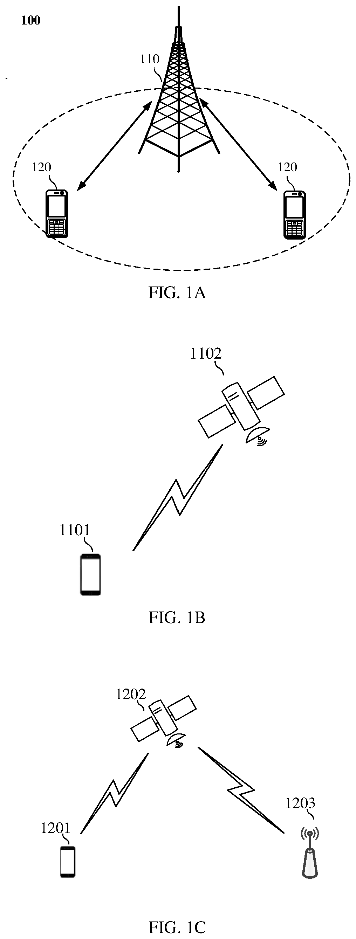

FIG. 1A is a schematic architectural diagram of a communication system provided by embodiments of the disclosure. As illustrated in FIG. 1A, a communication system 100 may include a network device 110. The network device 110 may be a device for communicating with a terminal device 120 (also referred to as a "communication terminal device" or a "terminal device"). The network device 110 may provide a communication coverage for a specific geographical area, and may communicate with terminal devices within a coverage area.

FIG. 1A exemplarily illustrates one network device and two terminal devices. In some embodiments of the disclosure, the communication system 100 may include multiple network devices, and there can be other quantities of terminal devices within a coverage area of each of the network devices. Embodiments of the disclosure are not limited in this regard.

FIG. 1B is a schematic architectural diagram of another communication system provided by embodiments of the disclosure. Referring to FIG. 1B, the communication system includes a terminal device 1101 and a satellite 1102. Wireless communication can be carried out between the terminal device 1101 and the satellite 1102. A network formed between the terminal device 1101 and the satellite 1102 can be referred to as an NTN. In the communication system architecture illustrated in FIG. 1B, the satellite 1102 may have functions of a base station, therefore direct communication can be carried out between the terminal device 1101 and the satellite 1102. In the system architecture, the satellite 1102 can be referred to as the network device. In some embodiments of the disclosure, the communication system may include multiple network devices 1102, and there can be other quantities of terminal devices in a coverage area of each of the network devices 1102. Embodiments of the disclosure are not limited in this regard.

FIG. 1C is a schematic architectural diagram of another communication system provided by embodiments of the disclosure. Referring to FIG. 1C, the communication system includes a terminal device 1201, a satellite 1202, and a base station 1203. Wireless communication can be carried out between the terminal device 1201 and the satellite 1202, and communication can be carried out between the satellite 1202 and the base station 1203. A network formed among the terminal device 1201, the satellite 1202, and the base station 1203 can be referred to as an NTN. In the communication system architecture illustrated in FIG. 1C, the satellite 1202 may not have functions of the base station, and communication between the terminal device 1201 and the base station 1203 needs to be relayed through the satellite 1202. In the system architecture, the base station 1203 may be referred to as the network device. In some embodiments of the disclosure, the communication system may include multiple network devices 1203, and there can be other quantities of terminal devices in a coverage area of each of the network devices 1203. Embodiments of the disclosure are not limited in this regard.

### II. Network Energy Saving

Network energy saving is of great significance for environmental sustainability, reducing impact on environment (reducing greenhouse gas emissions), and saving operational expenditure (OPEX). Energy consumption has become a key portion of an OPEX of operators. Most of the energy consumption are generated by a radio access network (RAN).

### III. Synchronization Signal/Physical Broadcast Channel (PBCH) Block (SSB) Transmission and Multi-Carrier Scenario in NR System

In the NR system, an initial access process of the terminal device may be completed by detecting a SSB or SS/PBCH block in a sync raster. During initial access, the terminal device attempts to search for an SSB according to a predefined possible time-frequency position of the SSB. With a detected SSB, the terminal device achieves time and frequency synchronization, and obtains radio frame timing and a cell identity (ID).

After the terminal device accesses a network, the network device may configure, according to a capability of the terminal device, multiple serving cells as secondary cells (SCells) for the terminal device, so as to improve a peak rate of data transmission of the terminal device. The multiple serving cells of the terminal device may serve the terminal device through a CA manner or a DC manner. The network device may activate or deactivate an SCell configured for the terminal device through a media access control - control element (MAC CE) command. When the network device activates the SCell of the terminal device, tracking reference signal (TRS) information of the SCell may be further indicated for the terminal device, such that the terminal device may perform a rapid cell synchronization based on the TRS on the SCell. The multiple serving cells of the terminal device may belong to the same timing advance group (TAG), or may belong to different TAGs. For an uplink (UL) cell(s) associated with serving cells belonging to the same TAG, the same timing reference cell and the same timing advance value may be used.

To achieve network energy saving, the network device may not transmit SSBs on the SCell of the terminal device, and accordingly, the terminal device does not receive the SSBs. However, in some cases, for example, in one or more serving cells included in one TAG of the terminal device, there shall be one timing reference cell, so that the terminal device can acquire, according to the timing reference cell, a timing advance value of an UL cell associated with the TAG. If the timing reference cell is an SCell, the terminal device needs to receive an SSB on the SCell to achieve timing synchronization. For another example, when the network device activates the SCell configured for the terminal device through the MAC CE command, the terminal device needs to receive the SSB on the SCell to achieve timing synchronization. For another example, the terminal device needs to perform Layer 1 (L1) measurement or Layer 3 (L3) measurement based on the SSB on the SCell. However, it is still unclear how to enable the terminal device to receive the SSB on the SCell, or how to enable the network device to learn that the terminal device has a requirement for receiving the SSB on the SCell, and therefore to send the SSB on a corresponding SCell.

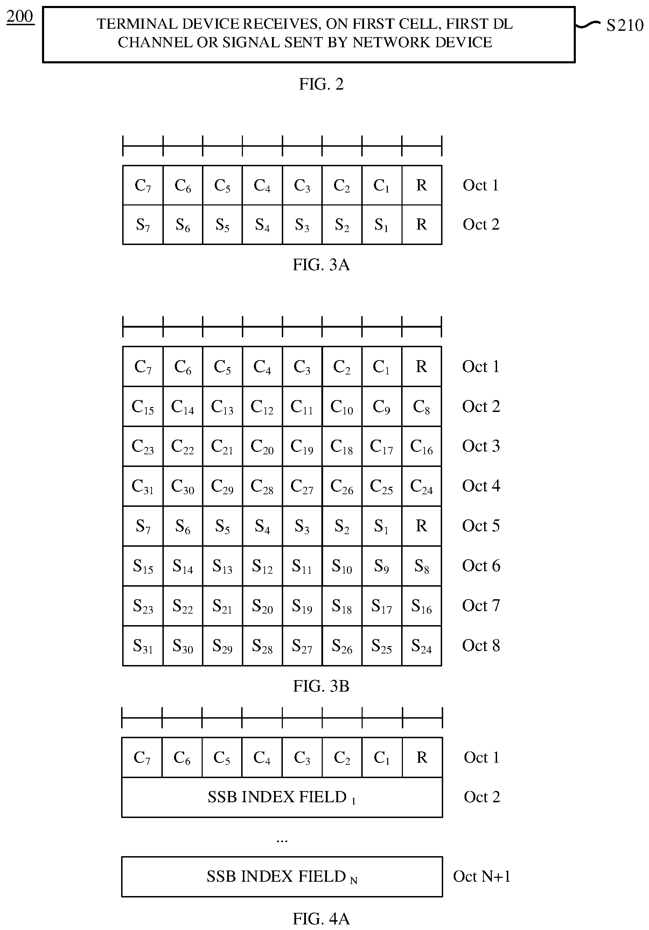

FIG. 2 is a schematic flow chart of a wireless communication method 200 according to an embodiment of the disclosure. The method may be optionally applied to the system illustrated in FIG. 1, but is not limited thereto. The method includes at least part of the following content.

In S210, a terminal device receives, on a first cell, a first downlink (DL) channel or signal sent by a network device.

In some embodiments, the first cell is a secondary cell (SCell) or a primary cell (PCell) of the terminal device. As an example, the first cell is the SCell of the terminal device.

In some embodiments, a type of the first DL channel or signal includes one or more of: SSB, system information block 1 (SIB1), channel state information - reference signal (CSI-RS), TRS, or positioning reference signal (PRS). The SSB may be an SSB burst, or may be one or more SSBs in an SSB burst. The CSI-RS may include one or more of: CSI-RS for CSI acquisition, or CSI-RS for beam management (BM). As an example, the first DL channel or signal is SSB.

With wireless communication methods provided by embodiments of the disclosure, the terminal device can receive SSB on the SCell of the terminal device.

In embodiments of the disclosure, the first DL channel or signal may not be transmitted on the first cell. For example, SSB may not be transmitted on the SCell of the terminal device, so as to achieve network energy saving. In order to enable the network device to learn that the terminal device has a requirement for receiving the first DL channel or signal on the first cell, the terminal device may request the network device to send the first DL channel or signal on the first cell, or the network device may actively send the first DL channel or signal on the first cell and notify the terminal device. For example, in order to enable the network device to learn that the terminal device has a requirement for receiving SSB or another reference signal, such as CSI-RS, PRS, TRS, etc., on the SCell, the terminal device may request the network device to transmit SSB on the SCell, or the network device may actively transmit SSB on the SCell and notify the terminal device. Therefore, the following solutions are provided in the disclosure.

Solution 1: The network device sends a second DL channel or signal to the terminal device. The second DL channel or signal indicates whether the network device is to send the first DL channel or signal (such as SSB) on the first cell. The terminal device receives the second DL channel or signal. In a case where the second DL channel or signal indicates that the network device is to send the first DL channel or signal on the first cell, the network device sends the first DL channel or signal on the first cell, and the terminal device receives the first DL channel or signal on the first cell. With this solution, the network device can indicate to the terminal device to receive SSB on the SCell, and the terminal device can receive SSB on the SCell.

Solution 2: The terminal device sends a first uplink (UL) channel or signal to the network device. The first UL channel or signal is used to request the network device to send the first DL channel or signal (such as SSB) on the first cell. Upon receiving the first UL channel or signal, the network device sends the first DL channel or signal on the first cell. After sending the first UL channel or signal, the terminal device receives the first DL channel or signal on the first cell. With this solution, the network device can learn that the terminal device has a requirement for receiving SSB on the SCell, therefore the network device sends SSB on a corresponding SCell.

Solution 3: The terminal device sends a first UL channel or signal to the network device. The first UL channel or signal is used to request the network device to send the first DL channel or signal (such as SSB) on the first cell. After receiving the first UL channel or signal, the network device sends a second DL channel or signal to the terminal device. The second DL channel or signal indicates whether the network device is to send the first DL channel or signal on the first cell. The second DL channel or signal may serve as a response to the first UL channel or signal, or may serve as an indication from the network device to notify the terminal device (for example, a terminal device sending the first UL channel or signal, and/or a terminal device not sending the first UL channel or signal) of whether to send the first DL channel or signal on the first cell. After sending the first UL channel or signal, the terminal device receives the second DL channel or signal. In a case where the second DL channel or signal indicates that the network device is to send the first DL channel or signal on the first cell, the network device sends the first DL channel or signal on the first cell, and the terminal device receives the first DL channel or signal on the first cell. With this solution, the network device can learn that the terminal device has a requirement for receiving SSB on the SCell, therefore the network device sends SSB on a corresponding SCell. In addition, the network device can indicate to the terminal device to receive SSB on the SCell.

In some examples, the first DL channel or signal and the second DL channel or signal have a requirement on a reception sequence. For example, the terminal device first detects or receives the second DL channel or signal, and then determines, according to a detection result or a reception result of the second DL channel or signal, whether to receive the first DL channel or signal.

In some examples, the first DL channel or signal and the second DL channel or signal may have no requirement on a reception sequence. For example, the terminal device may detect or receive both the first DL channel or signal and the second DL channel or signal at the same time; or the terminal device may first detect or receive the second DL channel or signal and then detect or receive the first DL channel or signal.

In some embodiments, a type of the second DL channel or signal includes one or more of: physical downlink shared channel (PDSCH), or physical downlink control channel (PDCCH).

In some embodiments, a type of the first UL channel or signal includes one or more of: physical uplink shared channel (PUSCH), sounding reference signal (SRS), physical uplink control channel (PUCCH), or physical random access channel (PRACH).

In some embodiments, the network device sends the second DL channel or signal to the terminal device as follows. The network device sends the second DL channel or signal to the terminal device on a second cell. Correspondingly, the terminal device receives, on the second cell, the second DL channel or signal sent by the network device.

In some embodiments, the second cell is an SCell of the terminal device, a PCell of the terminal device, or a primary secondary cell (PSCell) of the terminal device. As an example, the second cell is the PCell of the terminal device or the PSCell of the terminal device.

In some embodiments, the first cell and the second cell are the same cell.

In some embodiments, the first cell and the second cell are different cells. For example, the first cell is the SCell of the terminal device, and the second cell is the PCell of the terminal device or the PSCell of the terminal device.

In some embodiments, the second DL channel or signal indicates whether the network device is to send the first DL channel or signal on the first cell as follows. The second DL channel or signal indicates that the network device is to send the first DL channel or signal on the first cell; and/or the second DL channel or signal indicates that the network device is not to send the first DL channel or signal on the first cell.

In some examples, the second DL channel or signal indicates whether the network device is to send the first DL channel or signal on at least one cell in multiple cells. The multiple cells include the first cell. For example, the second DL channel or signal indicates whether the network device is to send the first DL channel or signal on each cell in the multiple cells.

In some embodiments, the second DL channel or signal indicates whether the network device is to send the first DL channel or signal on the first cell as follows. The second DL channel or signal carries first indication information. The first indication information indicates whether the network device is to send the first DL channel or signal on the first cell.

For example, the second DL channel or signal indicates that the network device is to send the first DL channel or signal on the first cell as follows. The first indication information indicates that the network device is to send the first DL channel or signal on the first cell.

For another example, the second DL channel or signal does not indicate that the network device is to send the first DL channel or signal on the first cell as follows. The first indication information does not indicate that the network device is to send the first DL channel or signal on the first cell, or the first indication information indicates that the network device is not to send the first DL channel or signal on the first cell.

In some embodiments, the first indication information is a first MAC CE, or the first indication information is first downlink control information (DCI).

As an example, the second DL channel or signal is PDSCH, and the first indication information is a first MAC CE.

As an example, the second DL channel or signal is PDCCH, and the first indication information is a first DCI.

In some embodiments, the first MAC CE indicates one or more of: whether at least one cell in multiple cells is activated or deactivated, whether the first DL channel or signal is to be sent on at least one cell in the multiple cells, or an index of the first DL channel or signal to be sent on at least one cell in the multiple cells. The multiple cells include the first cell.

For example, the first MAC CE indicates one or more of: whether each cell in the multiple cells is activated or deactivated, whether the first DL channel or signal is to be sent on each cell in the multiple cells, or an index of the first DL channel or signal to be sent on each cell in the multiple cells. The multiple cells include the first cell.

In some embodiments, the multiple cells are SCells. For example, the multiple cells include one or more SCells configured for the terminal device.

As an example, the second DL channel or signal is PDSCH, the first indication information is a first MAC CE, and the first MAC CE indicates whether the network device is to send the first DL channel or signal on at least one cell (such as each cell) in multiple cells configured for the terminal device. The multiple cells include the first cell.

As an example, the second DL channel or signal is a common PDCCH, the first indication information is a first DCI, and the first DCI indicates whether the network device is to send the first DL channel or signal on at least one cell (such as each cell) in the multiple cells. The multiple cells include the first cell.

In some embodiments, the first MAC CE corresponds to a first MAC CE format. The first MAC CE format includes a first information field and a second information field. The first information field indicates whether at least one cell in multiple cells is activated or deactivated. The second information field indicates whether the first DL channel or signal is to be sent on at least one cell in the multiple cells.

For example, the first information field indicates whether each cell in the multiple cells is activated or deactivated. The second information field indicates whether the first DL channel or signal is to be sent on each cell in the multiple cells.

In some embodiments, the first MAC CE format indicates at least one of: whether SSB is to be sent on each cell in the multiple cells, or whether each cell in the multiple cells is activated or deactivated.

FIG. 3A and FIG. 3B are schematic diagrams of first MAC CE formats when the maximum quantity (number) of cells is 7 or 31, respectively. As illustrated in FIG. 3A and FIG. 3B, the first MAC CE format includes the first information field (such as field *C*) and the second information field (such as field *S*). Each bit in field *C* may indicate whether one cell configured for the terminal device is activated or deactivated. Each bit in field *S* may indicate whether SSB is to be sent on one cell configured for the terminal device. The first MAC CE format may further include field *R*. Field *R* includes reserved bits. If no corresponding cell is configured for the terminal device, corresponding bits in field *C* and field *S* may be ignored (i.e., not interpreted). For example, cell numbers of cells configured for the terminal device are 1 to 3, then bits *C4* to *C7* and bits *S4* to *S7*, as illustrated in FIG. 3A, are ignored. For another example, cell numbers of cells configured for the terminal device are 1 to 15, then bits *C16* to *C31* and bits *S16* to *S31*, as illustrated in FIG. 3B, are ignored. It may be understood that the letters representing the above information fields are merely for explanation and may be replaced with other letters. For example, field *S* may be replaced with field *X*.

In one example, when *Ci* is set to a first preset value (such as 1), it indicates that a cell configured for the terminal device with a cell number *Ci* is activated; and when *Ci* is set to a second preset value (such as 0), it indicates that the cell configured for the terminal device with the cell number *Ci* is deactivated. When *Si* is set to the first preset value (such as 1), it indicates that SSB is to be sent on the cell configured for the terminal device with the cell number *Ci*; and when *Si* is set to the second preset value (such as 0), it indicates that SSB is not to be sent on the cell configured for the terminal device with the cell number *Ci*. Field R is a reserved bit(s) and is set to a preset value (such as 0). In embodiments of the disclosure, a specific value of the preset value is merely for explanation and may be replaced with other values. For example, when *Ci* is set to 0, it indicates that the cell configured for the terminal device with the cell number *Ci* is activated; and when *Ci* is set to the second preset value of 1, it indicates that the cell configured for the terminal device with the cell number *Ci* is deactivated.

In this example, whether a cell is configured to be activated or deactivated may be independent of whether an SSB is configured to be sent on the cell. For example, the first cell may be configured to one of: being activated and SSB being sent thereon, being deactivated and SSB being sent thereon, being activated and SSB not being sent thereon, and being deactivated and SSB not being sent thereon. Alternatively, whether a cell is configured to be activated or deactivated may be associated with whether an SSB is configured to be sent on the cell. For example, only a cell configured to be activated may be further configured with whether SSB is to be sent thereon. In this case, the first cell may be configured to one of: being activated and SSB being sent thereon, being activated and SSB not being sent thereon, and being deactivated. When the cell is configured as deactivated, a default behavior of the cell is that SSB is to be sent on the cell, or a default behavior of the cell is that SSB is not to be sent on the cell.

In some embodiments, the first MAC CE corresponds to a second MAC CE format. The second MAC CE format includes a first information field and a second information field. The first information field indicates whether at least one cell in multiple cells is activated or deactivated. The second information field indicates whether the first DL channel or signal is to be sent on at least one activated cell in the multiple cells, and/or an index of the first DL channel or signal to be sent.

For example, the first information field indicates whether each cell in the multiple cells is activated or deactivated. The second information field indicates whether the first DL channel or signal is to be sent on each activated cell in the multiple cells, and/or an index of the first DL channel or signal to be sent.

In some examples, the second information field includes *N* rows of bits. The *N* rows of bits are in one-to-one correspondence with *N* activated cells. *N* is greater than or equal to 1. Each row of bits in the *N* rows of bits indicates one of: an index of the first DL channel or signal to be sent, or not sending the first DL channel or signal.

In some examples, each row of bits in the *N* rows of bits includes *M* bits. The *M* bits are in one-to-one correspondence with indices of *M* first DL channels or signals. Each bit of the *M* bits indicates whether the network device is to send a first DL channel or signal of a corresponding index. *M* is greater than or equal to 1.

In some embodiments, the second MAC CE format indicates at least one of: whether SSB is to be sent on each cell in the multiple cells, an index of SSB to be sent on each cell in the multiple cells, or whether each cell in the multiple cells is activated or deactivated.

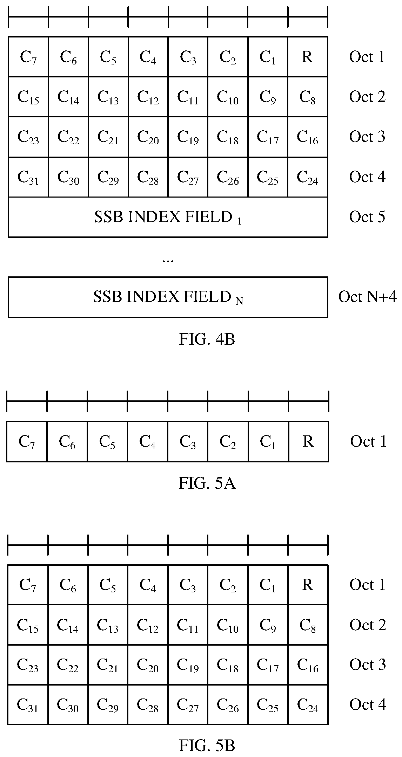

FIG. 4A and FIG. 4B are schematic diagrams of second MAC CE formats when the maximum number of cells is 7 or 31, respectively. As illustrated in FIG. 4A and FIG. 4B, the second MAC CE format includes a first information field (such as field *C*) and a second information field (an SSB index field). Each bit in field *C* may indicate whether one cell configured for the terminal device is activated or deactivated. The SSB index field is optional. When bits in field *C* indicate that *N* cells are activated, the SSB index field includes *N* rows of bits. Each row of the *N* rows of bits sequentially corresponds to one of the cell numbers of activated cells, such that each row of the *N* row bits indicates whether SSB is to be sent on one cell, or indicates the index of one SSB to be sent. The second MAC CE format may further include field *R*. Field R is a reserved bit(s). If no corresponding cell is configured for the terminal device, corresponding bits in field *C* are ignored (i.e., not interpreted). For example, cell numbers of cells configured for the terminal device are 1 to 3, then bits *C4* to *C7*, as illustrated in FIG. 4A, are ignored. For another example, cell numbers of cells configured for the terminal device are 1 to 15, then bits *C16* to *C31*, as illustrated in FIG. 4B, are ignored.

In one example, when *Ci* is set to a first preset value (such as 1), it indicates that a cell configured for the terminal device with a cell number *Ci* is activated; and when *Ci* is set to a second preset value (such as 0), it indicates that the cell configured for the terminal device with the cell number *Ci* is deactivated. When *Ci* is set to the first preset value (such as 1), the second MAC CE format includes one row of SSB index fields. This row of SSB index fields indicates whether SSB is to be sent on a cell with the cell number *Ci* being set to the first preset value, or indicates an index(s) of an SSB(s) included in an SSB burst to be sent, where SSB burst includes one or more SSBs. In one specific example, when bits in this row of SSB index fields are all set to 0, it indicates that SSB is not to be sent on the corresponding cell; otherwise, it indicates an index of an SSB sent by the corresponding cell. Field R is a reserved bit(s) and is set to a preset value (such as 0).

For example, cell numbers of cells configured for the terminal device are 1 to 5, and bits *C1* to *C5* are respectively set to "10011", which indicates that cells with cell numbers 1, 4, and 5 are activated. The second MAC CE format includes three rows of SSB index fields. A first row of SSB index fields indicates bits from high order to low order as "11010000", a second row of SSB index fields indicates bits from high order to low order as "00000000", and a third row of SSB index fields indicates bits from high order to low order as "11110000", which indicates the following: SSBs with indices of SSB0, SSB1, and SSB3 included in an SSB burst are to be sent on a cell with a cell number 1; no SSB is to be sent on a cell with a cell number 4; and SSBs with indices of SSB0, SSB1, SSB2, and SSB3 included in an SSB burst are to be sent on a cell with a cell number 5.

In some embodiments, the first MAC CE corresponds to a third MAC CE format. The third MAC CE format includes a first information field. The first information field indicates one of: whether at least one cell in multiple cells is activated or deactivated, whether the first DL channel or signal is to be sent on at least one cell in the multiple cells, or whether at least one cell in the multiple cells is activated or deactivated, where the first DL channel or signal is to be sent on an activated cell.

For example, the first information field indicates one of: whether each cell in the multiple cells is activated or deactivated, whether the first DL channel or signal is to be sent on each cell in the multiple cells, or whether each cell in the multiple cells is activated or deactivated, where the first DL channel or signal is to be sent on the activated cell.

In some examples, the third MAC CE format further includes a second information field. When the second information field indicates a first value, the first information field indicates whether at least one cell (such as each cell) in multiple cells is activated or deactivated; and/or when the second information field indicates a second value, the first information field indicates whether at least one cell (such as each cell) in the multiple cells is activated or deactivated, where the first DL channel or signal is to be sent on an activated cell.

In some examples, the third MAC CE format further includes the second information field. When the second information field indicates a first value, the first information field indicates whether at least one cell (such as each cell) in the multiple cells is activated or deactivated; and/or when the second information field indicates a second value, the first information field indicates whether at least one cell (such as each cell) in the multiple cells is to send the first DL channel or signal.

In some embodiments, the third MAC CE format indicates whether each cell in the multiple cells is activated or deactivated, and/or whether each cell in the multiple cells is activated or deactivated, where SSB is to be sent on an activated cell.

In some embodiments, the third MAC CE format indicates whether each cell in the multiple cells is activated or deactivated, and/or whether SSB is to be sent on each cell in the multiple cells.

FIG. 5A and FIG. 5B are schematic diagrams of third MAC CE formats when the maximum number of cells is 7 or 31, respectively. As illustrated in FIG. 5A and FIG. 5B, the third MAC CE format includes the first information field (such as field *C*) and the second information field (such as field *R*). Each bit in field *C* may be associated with one cell configured for the terminal device. If no corresponding cell is configured for the terminal device, corresponding bits in field *C* may be ignored (i.e., not interpreted). For example, cell numbers of cells configured for the terminal device are 1 to 3, then bits *C4* to *C7*, as illustrated in FIG. 5A, are ignored. For another example, cell numbers of cells configured for the terminal device are 1 to 15, then bits *C16* to *C31*, as illustrated in FIG. 5B, are ignored.

In one example, when *Ci* is set to a first preset value (such as 1), it indicates that SSB is to be sent on a cell configured for the terminal device with a cell number *Ci*; and when *Ci* is set to a second preset value (such as 0), it indicates that SSB is not to be sent on the cell configured for the terminal device with the cell number *Ci*. Field R is a reserved bit(s) and is set to a preset value (such as 0).

In another example, in a case where field *R* is set to a first preset value (such as 1), when *Ci* is set to a first preset value (such as 1), it indicates that SSB is to be sent on the cell configured for the terminal device with the cell number *Ci*; and when *Ci* is set to a second preset value (such as 0), it indicates that SSB is not to be sent on the cell configured for the terminal device with the cell number *Ci*. In a case where field *R* is set to a second preset value (such as 0), when *Ci* is set to the first preset value (such as 1), it indicates that the cell configured for the terminal device with the cell number *Ci* is activated; and when *Ci* is set to the second preset value (such as 0), it indicates that the cell configured for the terminal device with the cell number *Ci* is deactivated.

In yet another example, in a case where field R is set to a first preset value (such as 1), when *Ci* is set to a first preset value (such as 1), it indicates that the cell configured for the terminal device with the cell number *Ci* is activated; and when *Ci* is set to a second preset value (such as 0), it indicates that the cell configured for the terminal device with the cell number *Ci* is deactivated. In a case where field *R* is set to the second preset value (such as 0), when *Ci* is set to the first preset value (such as 1), it indicates that the cell configured for the terminal device with the cell number *Ci* is activated and SSB is to be sent on the activated cell; and when *Ci* is set to the second preset value (such as 0), it indicates that the cell configured for the terminal device with the cell number *Ci* is deactivated and SSB is not to be sent on the deactivated cell.

In some examples, the network device may further configure second indication information for the terminal device. The third MAC CE format includes the first information field. When the terminal device is not configured with the second indication information or when the second indication information configured for the terminal device indicates disabling, the first information field indicates whether at least one cell (such as each cell) in multiple cells is activated or deactivated; and/or when the terminal device is configured with the second indication information or when the second indication information configured for the terminal device indicates enabling, the first information field indicates whether at least one cell (such as each cell) in the multiple cells is activated or deactivated, where the first DL channel or signal is to be sent on an activated cell.

Still taking FIG. 5A and FIG. 5B as examples, as illustrated in FIG. 5A and FIG. 5B, in this example, the third MAC CE format includes the first information field (such as field *C*). Each bit in field *C* may be associated with one cell configured for the terminal device. In one example, in a case where the terminal device is not configured with the second indication information or in a case where the second indication information configured for the terminal device indicates disabling, when *Ci* is set to a first preset value (such as 1), it indicates that the cell configured for the terminal device with the cell number *Ci* is activated; and when *Ci* is set to a second preset value (such as 0), it indicates that the cell configured for the terminal device with the cell number *Ci* is deactivated. In a case where the terminal device is configured with the second indication information or in a case where the second indication information configured for the terminal device indicates enabling, when *Ci* is set to the first preset value (such as 1), it indicates that the cell configured for the terminal device with the cell number *Ci* is activated, and SSB is to be sent on the activated cell; and when *Ci* is set to the second preset value (such as 0), it indicates that the cell configured for the terminal device with the cell number *Ci* is deactivated, and SSB is not to be sent on the deactivated cell. The third MAC CE format may further include a reserved field (such as field *R*). Field R is a reserved bit(s) and is set to a preset value (such as 0).

In some embodiments, the terminal device may further start or restart a first timer.

For example, in some embodiments, after receiving the second DL channel or signal, the terminal device starts or restarts the first timer as follows. The terminal device starts or restarts the first timer at an end of a last symbol of the second DL channel or signal. Alternatively, when the second DL channel or signal is a PDCCH, the terminal device starts or restarts the first timer at an end of a last symbol of a control-resource set (CORESET) to which the PDCCH belongs. Alternatively, when the second DL channel or signal is a PDSCH, the terminal device starts or restarts the first timer at a start of an effective time of a first MAC CE carried by the PDSCH.

In some embodiments, after receiving the second DL channel or signal, the terminal device starts or restarts the first timer as follows. The terminal device starts or restarts the first timer after a first duration following receiving the second DL channel or signal. The first duration may be predefined, or the first duration may be configured by the network device.

As an example, the terminal device starts or restarts the first timer after the first duration from the end of the last symbol of the second DL channel or signal. Alternatively, when the second DL channel or signal is a PDCCH, the terminal device starts or restarts the first timer after the first duration from the end of the last symbol of the CORESET to which the PDCCH belongs. Alternatively, when the second DL channel or signal is a PDSCH, the terminal device starts or restarts the first timer after the first duration from the start of the effective time of the first MAC CE carried by the PDSCH.

In some embodiments, within a validity duration of the first timer, the network device sends the first DL channel or signal on the first cell, and/or the terminal device receives the first DL channel or signal on the first cell.

In some embodiments, in a case where the second DL channel or signal indicates that the network device is to send the first DL channel or signal on the first cell, within the validity duration of the first timer, the network device sends the first DL channel or signal on the first cell, and/or the terminal device receives the first DL channel or signal on the first cell.

In some embodiments, the terminal device receives the second DL channel or signal after the first timer expires. For example, the terminal device receives, on the second cell, the second DL channel or signal sent by the network device after the first timer expires.

In some embodiments, if the terminal device receives again, on the second cell, the second DL channel or signal sent by the network device, the terminal device restarts the first timer.

In some embodiments, the first timer and/or a duration of the first timer is configured by the network device.

In some embodiments, the first timer and/or the duration of the first timer is predefined.

In some embodiments, the terminal device sends the first UL channel or signal to the network device as follows. The terminal device sends, on a third cell, the first UL channel or signal to the network device. Correspondingly, the network device receives, on the third cell, the first UL channel or signal sent by the terminal device.

In some embodiments, the third cell is a SCell of the terminal device, a PCell of the terminal device, or a PSCell of the terminal device. As an example, the third cell is the PCell of the terminal device or the PSCell of the terminal device.

In some embodiments, the first cell and the third cell are the same cell.

In some embodiments, the first cell and the third cell are different cells. For example, the first cell is a SCell, and the third cell is a PCell or a PSCell.

In some embodiments, when the first cell and the third cell are the same cell, the type of the first UL channel or signal is one of: SRS, PUCCH, and PRACH.

In some embodiments, when the first cell and the third cell are different cells, or when the third cell is a PCell or a PSCell, the type of the first UL channel or signal is PUSCH.

In some embodiments, the third cell and the second cell are the same cell. For example, the terminal device sends, on the second cell, the first UL channel or signal to the network device, and receives the second DL channel or signal on the second cell.

In some embodiments, the third cell and the second cell are different cells.

In some embodiments, the third cell, the second cell, and the first cell are the same cell. For example, the terminal device sends, on the first cell, the first UL channel or signal to the network device, and receives the second DL channel or signal and the first DL channel or signal on the first cell.

In some embodiments, the first UL channel or signal is used to request the network device to send the first DL channel or signal on the first cell as follows. The type of the first UL channel or signal is PUSCH. The first UL channel or signal carries a second MAC CE. The second MAC CE is used to request the network device to send the first DL channel or signal on the first cell. For example, the second MAC CE is used to request the network device to send the first DL channel or signal on the first cell, or the second MAC CE is used to request the network device not to send the first DL channel or signal on the first cell. As an example, the first cell and the third cell are different cells. The terminal device sends a first PUSCH on the third cell, and the first PUSCH carries the second MAC CE, which is used to request the network device to send SSB on the first cell.

In some embodiments, the first UL channel or signal is used to request the network device to send the first DL channel or signal on the first cell as follows. The first UL channel or signal is used to request the network device to send the first DL channel or signal on at least one cell in multiple cells. The multiple cells include the first cell. For example, the first UL channel or signal is used to request the network device to send or not to send the first DL channel or signal on each cell in the multiple cells. The multiple cells include the first cell.

As an example, the first UL channel or signal is PUSCH. The PUSCH carries the second MAC CE. The second MAC CE is used to request the network device to send the first DL channel or signal on at least one cell in the multiple cells. The multiple cells include the first cell.

As another example, the first cell and the third cell are different cells. The terminal device sends the first PUSCH on the third cell. The first PUSCH carries the second MAC CE. The second MAC CE is used to request the network device to send SSB on at least one cell in the multiple cells. The multiple cells include the first cell.

In some embodiments, the terminal device may start or restart a second timer.

In some embodiments, after sending the first UL channel or signal, the terminal device starts or restarts the second timer. For example, the terminal device starts or restarts the second timer at an end of a last symbol of the first UL channel or signal. Alternatively, the terminal device starts or restarts the second timer after a second duration from the end of the last symbol of the first UL channel or signal. The second duration is predefined, or the second duration is configured by the network device.

In some embodiments, within a validity duration of the second timer, the network device sends the first DL channel or signal and/or the second DL channel or signal; and/or the terminal device receives the first DL channel or signal and/or the second DL channel or signal.

In some embodiments, within the validity duration of the second timer, the terminal device does not send the first UL channel or signal to the network device.

In some embodiments, if the terminal device does not receive the first DL channel or signal within the validity duration of the second timer, after the second timer expires, the terminal device may send the first UL channel or signal, that is, the terminal device resends the first UL channel or signal to the network device.

In some embodiments, if the terminal device does not receive the second DL channel or signal within the validity duration of the second timer, after the second timer expires, the terminal device may send the first UL channel or signal, that is, the terminal device resends the first UL channel or signal to the network device.

In some embodiments, if the terminal device does not receive the first DL channel or signal and the second DL channel or signal within the validity duration of the second timer, after the second timer expires, the terminal device may send the first UL channel or signal, that is, the terminal device resends the first UL channel or signal to the network device.

In some embodiments, if the terminal device resends the first UL channel or signal to the network device, the terminal device restarts the second timer after resending the first UL channel or signal.

In some embodiments, the second timer and/or a duration of the second timer is configured by the network device.

In some embodiments, the second timer and/or the duration of the second timer is predefined.

In some embodiments, the first UL channel or signal and the second DL channel or signal are transmitted via the same cell. For example, the first UL channel or signal and the second DL channel or signal are both transmitted via the first cell. For another example, the first UL channel or signal and the second DL channel or signal are both transmitted via the second cell.

In some embodiments, the first UL channel or signal and the second DL channel or signal are transmitted via different cells. For example, the first UL channel or signal is transmitted via the second cell, while the second DL channel or signal is transmitted via the first cell.

In some embodiments, the method provided by embodiments of the disclosure further includes the following. The terminal device receives first configuration information sent by the network device. The first configuration information is used to configure a resource of the first DL channel or signal.

In some embodiments, the first DL channel or signal is SSB. The first configuration information is used to configure at least one of: an ID of the first cell, a first SSB set on the first cell, a time-domain position of the first SSB set, a frequency-domain position of the first SSB set, or a subcarrier spacing of an SSB on the first cell.

In some examples, the time-domain position of the first SSB set includes at least one of: an SSB measurement timing configuration (SMTC) window associated with the first SSB set, a period of the first SSB set, or an indication of a half-frame in which the first SSB set is located.

In some examples, the frequency-domain position of the first SSB set includes an absolute radio-frequency channel number (ARFCN) value (such as ARFCN-ValueNR) corresponding to the first SSB set.

In some embodiments, the first DL channel or signal is SSB. The first configuration information is used to configure at least one of: IDs of multiple cells, SSB sets on the multiple cells, time-domain positions of the SSB sets on the multiple cells, frequency-domain positions of the SSB sets on the multiple cells, or a subcarrier spacing of SSBs on the multiple cells. The multiple cells include the first cell.

In some embodiments, the method provided by embodiments of the disclosure further includes the following. The terminal device receives second configuration information sent by the network device. The second configuration information is used to configure a resource of the second DL channel or signal.

In some embodiments, the second configuration information is used to configure at least one of: a time-domain position of the second DL channel or signal, a frequency-domain position of the second DL channel or signal, a time-domain position and/or a frequency-domain position of a PDCCH scheduling the second DL channel or signal when a type of the second DL channel or signal is PDSCH, an association relationship between the first cell and the second DL channel or signal, a first timer, or a duration of the first timer.

In some embodiments, the method further includes the following. The terminal device receives third configuration information sent by the network device. The third configuration information is used to configure a resource of the first UL channel or signal.

In some embodiments, the third configuration information is used to configure at least one of: a time-domain position of the first UL channel or signal, a frequency-domain position of the first UL channel or signal, a time-domain position and/or a frequency-domain position of a PDCCH scheduling the first UL channel or signal when the type of the first UL channel or signal is PUSCH, an association relationship between the first cell and the first UL channel or signal, a second timer, or a duration of the second timer.

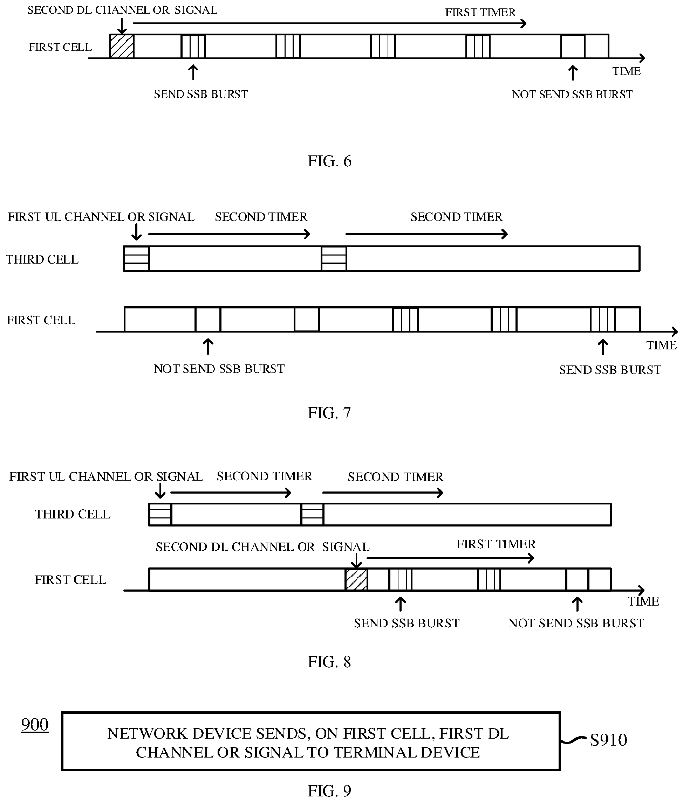

FIG. 6 is a schematic diagram of a wireless communication method of Solution 1 according to embodiments of the disclosure. In an example illustrated in FIG. 6, the first cell and the second cell are the same cell. The network device sends the second DL channel or signal (assuming that the second DL channel or signal carries a first MAC CE) to the terminal device on the first cell. The second DL channel or signal (i.e., the first MAC CE) indicates whether the network device is to send the first DL channel or signal (such as an SSB burst) on the first cell. The terminal device receives the second DL channel or signal on the first cell. The second DL channel or signal indicates that the network device is to send the first DL channel or signal (such as the SSB burst) on the first cell. The terminal device starts the first timer. Within the validity duration of the first timer, the network device sends the SSB burst on the first cell, and the terminal device receives the SSB burst on the first cell. After the first timer expires, the network device does not send the SSB burst on the first cell, and the terminal device does not receive the SSB burst on the first cell.

FIG. 7 is a schematic diagram of a wireless communication method of Solution 2 according to embodiments of the disclosure. In an example illustrated in FIG. 7, the first cell and the third cell are the same cell or are different cells. The terminal device sends, on the third cell, the first UL channel or signal (assuming that the first UL channel or signal carries a second MAC CE) to the network device. The first UL channel or signal (i.e., the second MAC CE) is used to request the network device to send the first DL channel or signal (an SSB burst) on the first cell. The terminal device starts the second timer. If the terminal device does not receive the SSB burst on the first cell within the validity duration of the second timer, the terminal device may resend the first UL channel or signal on the third cell and restart the second timer. Upon receiving the first UL channel or signal, the network device sends the SSB burst on the first cell, and the terminal device receives the SSB burst on the first cell.

FIG. 8 is a schematic diagram of a wireless communication method of Solution 3 according to embodiments of the disclosure. In an example illustrated in FIG. 8, the first cell and the second cell are the same cell. The first cell and the third cell are the same cell or are different cells. The terminal device sends, on the third cell, the first UL channel or signal to the network device. The first UL channel or signal is used to request the network device to send the first DL channel or signal (an SSB burst) on the first cell. The terminal device starts the second timer. If the terminal device does not receive the second DL channel or signal and/or the first DL channel or signal (such as the SSB burst) on the first cell within the validity duration of the second timer, the terminal device may resend the first UL channel or signal on the third cell and restart the second timer. After receiving the first UL channel or signal, the network device sends the second DL channel or signal to the terminal device on the first cell. The second DL channel or signal indicates whether the network device is to send the first DL channel or signal (the SSB burst) on the first cell. The terminal device receives the second DL channel or signal on the first cell. The second DL channel or signal indicates that the network device is to send the first DL channel or signal (the SSB burst) on the first cell. The terminal device starts the first timer. Within the validity duration of the first timer, the network device sends the SSB burst on the first cell, and the terminal device receives the SSB burst on the first cell. After the first timer expires, the network device does not send the SSB burst on the first cell, and the terminal device does not receive the SSB burst on the first cell.

FIG. 9 is a schematic flow chart of a wireless communication method 900 according to an embodiment of the disclosure. The method may be optionally applied to the system illustrated in FIG. 1, but is not limited thereto. The method includes at least part of the following content.

In S910, a network device sends, on a first cell, a first downlink (DL) channel or signal to a terminal device.

In one implementation, a type of the first DL channel or signal includes one or more of: SSB, SIB1, CSI-RS, TRS, or PRS. In one example, the first DL channel or signal is SSB.

In one implementation, the first cell includes an SCell of the terminal device, a PCell of the terminal device, or a PSCell of the terminal device. In one example, the first cell is an SCell of the terminal device.

With wireless communication methods provided by embodiments of the disclosure, the network device may send SSB to the terminal device on the SCell of the terminal device.

In one implementation, the method further includes the following. The network device sends a second DL channel or signal to the terminal device. The second DL channel or signal indicates whether the network device is to send the first DL channel or signal on the first cell.

By sending the second DL channel or signal to the terminal device, the terminal device may be notified to receive the first DL channel or signal on the first cell.

In one implementation, the second DL channel or signal indicates whether the network device is to send the first DL channel or signal on the first cell as follows. The second DL channel or signal indicates that the network device is to send the first DL channel or signal on the first cell; and/or the second DL channel or signal indicates that the network device is not to send the first DL channel or signal on the first cell.

In one implementation, the second DL channel or signal indicates whether the network device is to send the first DL channel or signal on the first cell as follows. The second DL channel or signal indicates whether the network device is to send the first DL channel or signal on at least one cell in multiple cells. The multiple cells include the first cell.

In one implementation, the second DL channel or signal indicates whether the network device is to send the first DL channel or signal on the first cell as follows. The second DL channel or signal carries first indication information. The first indication information indicates whether the network device is to send the first DL channel or signal on the first cell.

In one implementation, the second DL channel or signal is PDSCH, and the first indication information is a first MAC CE. Alternatively, the second DL channel or signal is PDCCH, and the first indication information is a first DCI.

In one implementation, the first MAC CE indicates one or more of: whether at least one cell in multiple cells is activated or deactivated, whether the first DL channel or signal is to be sent on at least one cell in the multiple cells, or an index of the first DL channel or signal to be sent on at least one cell in the multiple cells. The multiple cells include the first cell.

In one implementation, the first MAC CE corresponds to a first MAC CE format. The first MAC CE format includes a first information field and a second information field. The first information field indicates whether at least one cell in multiple cells is activated or deactivated. The second information field indicates whether the first DL channel or signal is to be sent on at least one cell in the multiple cells.

In one implementation, the first MAC CE corresponds to a second MAC CE format. The second MAC CE format includes a first information field and a second information field. The first information field indicates whether at least one cell in multiple cells is activated or deactivated. The second information field indicates whether the first DL channel or signal is to be sent on at least one activated cell in the multiple cells, and/or an index of the first DL channel or signal to be sent.

In one implementation, the second information field includes *N* rows of bits. The *N* rows of bits are in one-to-one correspondence with *N* activated cells. *N* is greater than or equal to 1. Each row of bits in the *N* rows of bits indicates one of: an index of the first DL channel or signal to be sent, or not sending the first DL channel or signal.

In one implementation, each row of bits in the *N* rows of bits includes *M* bits. The *M* bits are in one-to-one correspondence with indices of *M* first DL channels or signals. Each bit of the *M* bits indicates whether the network device is to send a first DL channel or signal of a corresponding index. *M* is greater than or equal to 1.

In one implementation, the first MAC CE corresponds to a third MAC CE format. The third MAC CE format includes a first information field. The first information field indicates one of: whether at least one cell in multiple cells is activated or deactivated, whether the first DL channel or signal is to be sent on at least one cell in the multiple cells, or whether at least one cell in the multiple cells is activated or deactivated, where the first DL channel or signal is to be sent on an activated cell.

In one implementation, the third MAC CE format further includes a second information field. When the second information field indicates a first value, the first information field indicates whether at least one cell in multiple cells is activated or deactivated; and/or when the second information field indicates a second value, the first information field indicates whether at least one cell in the multiple cells is activated or deactivated, where the first DL channel or signal is to be sent on an activated cell.

In one implementation, when the terminal device is not configured with second indication information or when the second indication information configured for the terminal device indicates disabling, the first information field indicates whether at least one cell in multiple cells is activated or deactivated; and/or when the terminal device is configured with the second indication information or when the second indication information configured for the terminal device indicates enabling, the first information field indicates whether at least one cell in the multiple cells is activated or deactivated, where the first DL channel or signal is to be sent on an activated cell.

In one implementation, the network device sends the second DL channel or signal to the terminal device as follows. The network device sends the second DL channel or signal on a second cell.

In one implementation, before sending the first DL channel or signal on the first cell by the network device, the method further includes the following. The network device receives a first UL channel or signal from the terminal device. The first UL channel or signal is used to request the network device to send the first DL channel or signal on the first cell.

By receiving the first UL channel or signal sent by the terminal device, the network device may learn that the terminal device has a requirement for receiving SSB on the SCell, therefore the network device sends SSB on a corresponding SCell.

In one implementation, the first UL channel or signal is used to request the network device to send the first DL channel or signal on the first cell as follows. The first UL channel or signal is used to request the network device to send the first DL channel or signal on at least one cell in multiple cells. The multiple cells include the first cell.

In one implementation, a type of the first UL channel or signal includes one or more of: SRS, PUCCH, or PRACH.

In one implementation, the first UL channel or signal is used to request the network device to send the first DL channel or signal on the first cell as follows. The type of the first UL channel or signal is PUSCH. The first UL channel or signal carries the second MAC CE. The second MAC CE is used to request the network device to send the first DL channel or signal on the first cell.

In one implementation, the network device receives the first UL channel or signal from the terminal device as follows. The network device receives the first UL channel or signal on a third cell.

In one implementation, the method further includes the following. The network device sends first configuration information to the terminal device. The first configuration information is used to configure a resource of the first DL channel or signal.

In one implementation, the first configuration information is used to configure at least one of: an ID of the first cell, a first SSB set on the first cell, a time-domain position of the first SSB set, a frequency-domain position of the first SSB set, or a subcarrier spacing of an SSB on the first cell.

In one implementation, the time-domain position of the first SSB set includes at least one of: an SMTC window associated with the first SSB set, a period of the first SSB set, or an indication of a half-frame in which the first SSB set is located.

In one implementation, the frequency-domain position of the first SSB set includes an ARFCN value corresponding to the first SSB set.

In one implementation, the first configuration information is used to configure at least one of: IDs of multiple cells, SSB sets on the multiple cells, time-domain positions of the SSB sets on the multiple cells, frequency-domain positions of the SSB sets on the multiple cells, or a subcarrier spacing of SSBs on the multiple cells. The multiple cells include the first cell.

In one implementation, the method further includes the following. The network device sends second configuration information to the terminal device. The second configuration information is used to configure a resource of the second DL channel or signal.

In one implementation, the second configuration information is used to configure at least one of: a time-domain position of the second DL channel or signal, a frequency-domain position of the second DL channel or signal, a time-domain position and/or a frequency-domain position of a PDCCH scheduling the second DL channel or signal when the type of the second DL channel or signal is PDSCH, an association relationship between the first cell and the second DL channel or signal, a first timer, or a duration of the first timer.

In one implementation, the method further includes the following. The network device sends third configuration information to the terminal device. The third configuration information is used to configure a resource of the first UL channel or signal.

In one implementation, the third configuration information is used to configure at least one of: a time-domain position of the first UL channel or signal, a frequency-domain position of the first UL channel or signal, a time-domain position and/or a frequency-domain position of a PDCCH scheduling the first UL channel or signal when the type of the first UL channel or signal is PUSCH, an association relationship between the first cell and the first UL channel or signal, a second timer, or a duration of the second timer.

For specific examples of performing the method 900 by the network device in embodiments, reference can be made to the relevant elaborations of the network device such as a base station in the above method 200, which will not be repeated herein for brevity.

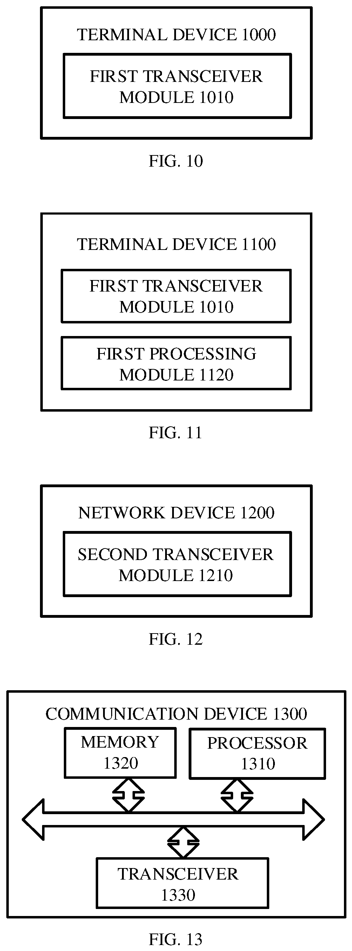

FIG. 10 is a schematic block diagram of a terminal device 1000 according to an embodiment of the disclosure. The terminal device 1000 may include a first transceiver module 1010 configured to receive, on a first cell, a first DL channel or signal sent by a network device.

In some implementations, the first transceiver module 1010 is further configured to receive a second DL channel or signal. The second DL channel or signal indicates whether the network device is to send the first DL channel or signal on the first cell.

In some implementations, the second DL channel or signal indicates whether the network device is to send the first DL channel or signal on the first cell as follows. The second DL channel or signal indicates that the network device is to send the first DL channel or signal on the first cell; and/or the second DL channel or signal indicates that the network device is not to send the first DL channel or signal on the first cell.

In some implementations, the second DL channel or signal indicates whether the network device is to send the first DL channel or signal on the first cell as follows. The second DL channel or signal indicates whether the network device is to send the first DL channel or signal on at least one cell in multiple cells. The multiple cells include the first cell.

In some implementations, the second DL channel or signal indicates whether the network device is to send the first DL channel or signal on the first cell as follows. The second DL channel or signal carries first indication information. The first indication information indicates whether the network device is to send the first DL channel or signal on the first cell.

In some implementations, the second DL channel or signal is PDSCH, and the first indication information is a first MAC CE. Alternatively, the second DL channel or signal is PDCCH, and the first indication information is a first DCI.

In some implementations, the first MAC CE indicates one or more of: whether at least one cell in multiple cells is activated or deactivated, whether the first DL channel or signal is to be sent on at least one cell in the multiple cells, or an index of the first DL channel or signal to be sent on at least one cell in the multiple cells. The multiple cells include the first cell.

In some implementations, the first MAC CE corresponds to a first MAC CE format. The first MAC CE format includes a first information field and a second information field. The first information field indicates whether at least one cell in multiple cells is activated or deactivated. The second information field indicates whether the first DL channel or signal is to be sent on at least one cell in the multiple cells.

In some implementations, the first MAC CE corresponds to a second MAC CE format. The second MAC CE format includes a first information field and a second information field. The first information field indicates whether at least one cell in multiple cells is activated or deactivated. The second information field indicates whether the first DL channel or signal is to be sent on at least one activated cell in the multiple cells, and/or an index of the first DL channel or signal to be sent.

In some implementations, the second information field includes *N* rows of bits. The *N* rows of bits are in one-to-one correspondence with *N* activated cells. *N* is greater than or equal to 1. Each row of bits in the *N* rows of bits indicates one of: an index of the first DL channel or signal to be sent, or not sending the first DL channel or signal.

In some implementations, each row of bits in the *N* rows of bits includes *M* bits. The *M* bits are in one-to-one correspondence with indices of *M* first DL channels or signals. Each bit of the *M* bits indicates whether the network device is to send a first DL channel or signal of a corresponding index. *M* is greater than or equal to 1.

In some implementations, the first MAC CE corresponds to a third MAC CE format. The third MAC CE format includes a first information field. The first information field indicates one of: whether at least one cell in multiple cells is activated or deactivated, whether the first DL channel or signal is to be sent on at least one cell in the multiple cells, or whether at least one cell in the multiple cells is activated or deactivated, where the first DL channel or signal is to be sent on an activated cell.

In some implementations, the third MAC CE format further includes a second information field. When the second information field indicates a first value, the first information field indicates whether at least one cell in multiple cells is activated or deactivated; and/or when the second information field indicates a second value, the first information field indicates whether at least one cell in the multiple cells is activated or deactivated, where the first DL channel or signal is to be sent on an activated cell.

In some implementations, when the terminal device is not configured with second indication information or when the second indication information configured for the terminal device indicates disabling, the first information field indicates whether at least one cell in multiple cells is activated or deactivated; and/or when the terminal device is configured with second indication information or when the second indication information configured for the terminal device indicates enabling, the first information field indicates whether at least one cell in the multiple cells is activated or deactivated, where the first DL channel or signal is to be sent on an activated cell.

FIG. 11 is a schematic block diagram of a terminal device 1100 according to an embodiment of the disclosure. As illustrated in FIG. 11, the terminal device 1100 includes a first processing module 1120 configured to start or restart a first timer.

In some implementations, the first processing module 1120 is further configured to start or restart the first timer at an end of a last symbol of a second DL channel or signal. The first processing module 1120 is further configured to start or restart the first timer at an end of a last symbol of a CORESET to which the second DL channel or signal belongs. The first processing module 1120 is further configured to start or restart the first timer at a start of an effective time of a first MAC CE carried by the second DL channel or signal. The first processing module 1120 is further configured to start or restart the first timer after a first duration from the end of the last symbol of the second DL channel or signal. The first processing module 1120 is further configured to start or restart the first timer after the first duration from the end of the last symbol of the CORESET to which the second DL channel or signal belongs. The first processing module 1120 is further configured to start or restart the first timer after the first duration from the start of the effective time of the first MAC CE carried by the second DL channel or signal.

In some implementations, the first duration is predefined. Alternatively, the first duration is configured by a network device.

In some implementations, a first transceiver module 1010 is configured to receive, on a first cell, a first DL channel or signal sent by the network device within a validity duration of the first timer.

In some implementations, the first transceiver module 1010 is further configured to receive the second DL channel or signal after the first timer expires.

In some implementations, the first transceiver module 1010 is configured to receive the second DL channel or signal on a second cell.

In some implementations, the first transceiver module 1010 is further configured to send a first UL channel or signal. The first UL channel or signal is used to request the network device to send the first DL channel or signal on the first cell.

In some implementations, the first UL channel or signal is used to request the network device to send the first DL channel or signal on the first cell as follows. The first UL channel or signal is used to request the network device to send the first DL channel or signal on at least one cell in multiple cells. The multiple cells include the first cell.

In some implementations, a type of the first UL channel or signal includes one or more of: SRS, PUCCH, or PRACH.

In some implementations, the first UL channel or signal is used to request the network device to send the first DL channel or signal on the first cell as follows. The type of the first UL channel or signal is PUSCH. The first UL channel or signal carries a second MAC CE. The second MAC CE is used to request the network device to send the first DL channel or signal on the first cell.

In some implementations, the first processing module 1120 is further configured to start or restart a second timer.

In some implementations, the first processing module 1120 is further configured to start or restart the second timer at an end of a last symbol of the first UL channel or signal. The first processing module 1120 is further configured to start or restart the second timer after a second duration from the end of the last symbol of the first UL channel or signal.

In some implementations, the second duration is predefined. Alternatively, the second duration is configured by the network device.

In some implementations, the first transceiver module 1010 is further configured to receive the first DL channel or signal on the first cell within a validity duration of the second timer; and/or to receive the second DL channel or signal within the validity duration of the second timer, where the second DL channel or signal indicates whether the network device is to send the first DL channel or signal on the first cell.

In some implementations, the first transceiver module 1010 is further configured to perform one of: sending the first UL channel or signal after the second timer expires, if the first DL channel or signal is not received within the validity duration of the second timer; sending the first UL channel or signal after the second timer expires, if the second DL channel or signal is not received within the validity duration of the second timer; or sending the first UL channel or signal after the second timer expires, if the first DL channel or signal and the second DL channel or signal are not received within the validity duration of the second timer.

In some implementations, the first transceiver module 1010 is configured to send the first UL channel or signal on a third cell.

In some implementations, the first transceiver module 1010 is further configured to receive first configuration information sent by the network device. The first configuration information is used to configure a resource of the first DL channel or signal.

In some implementations, the first configuration information is used to configure at least one of: an ID of the first cell, a first SSB set on the first cell, a time-domain position of the first SSB set, a frequency-domain position of the first SSB set, or a subcarrier spacing of an SSB on the first cell.

In some implementations, the time-domain position of the first SSB set includes at least one of: an SMTC window associated with the first SSB set, a period of the first SSB set, or an indication of a half-frame in which the first SSB set is located.

In some implementations, the frequency-domain position of the first SSB set includes an ARFCN value corresponding to the first SSB set.

In some implementations, the first configuration information is used to configure at least one of: IDs of multiple cells, SSB sets on the multiple cells, time-domain positions of the SSB sets on the multiple cells, frequency-domain positions of the SSB sets on the multiple cells, or a subcarrier spacing of SSBs on the multiple cells. The multiple cells include the first cell.

In some implementations, the first transceiver module 1010 is further configured to receive second configuration information sent by the network device. The second configuration information is used to configure a resource of the second DL channel or signal.

In some implementations, the second configuration information is used to configure at least one of: a time-domain position of the second DL channel or signal, a frequency-domain position of the second DL channel or signal, a time-domain position and/or a frequency-domain position of a PDCCH scheduling the second DL channel or signal when a type of the second DL channel or signal is PDSCH, an association relationship between the first cell and the second DL channel or signal, a first timer, or a duration of the first timer.

In some implementations, the first transceiver module 1010 is further configured to receive third configuration information sent by the network device. The third configuration information is used to configure a resource of the first UL channel or signal.

In some implementations, the third configuration information is used to configure at least one of: a time-domain position of the first UL channel or signal, a frequency-domain position of the first UL channel or signal, a time-domain position and/or a frequency-domain position of a PDCCH scheduling the first UL channel or signal when the type of the first UL channel or signal is PUSCH, an association relationship between the first cell and the first UL channel or signal, a second timer, or a duration of the second timer.

In some implementations, a type of the first DL channel or signal includes one or more of: an SSB, SIB1, a CSI-RS, a TRS, or a PRS.

The terminal device 1000 and the terminal device 1100 in embodiments of the disclosure can implement corresponding functions of the terminal device in the above method embodiments. For the procedure, function, implementation, and advantage corresponding to each module (sub-module, unit, or assembly, etc.) in the terminal device 1000 and the terminal device 1100, reference can be made to the corresponding illustrations in the above method embodiments, which will not be repeated herein. It may be noted that, functions of various modules (sub-modules, units, or assemblies, etc.) in the terminal device 1000 and the terminal device 1100 described in embodiments of the disclosure may be implemented by different modules (sub-modules, units, or assemblies, etc.), or may be implemented by the same module (sub-module, unit, or assembly, etc.).

FIG. 12 is a schematic block diagram of a network device 1200 according to an embodiment of the disclosure. The network device 1200 may include a second transceiver module 1210 configured to send a first DL channel or signal to a terminal device on a first cell.

In some implementations, the second transceiver module 1210 is further configured to send a second DL channel or signal to the terminal device. The second DL channel or signal indicates whether the network device is to send the first DL channel or signal on the first cell.

In some implementations, the second DL channel or signal indicates whether the network device is to send the first DL channel or signal on the first cell as follows. The second DL channel or signal indicates that the network device is to send the first DL channel or signal on the first cell; and/or the second DL channel or signal indicates that the network device is not to send the first DL channel or signal on the first cell.

In some implementations, the second DL channel or signal indicates whether the network device is to send the first DL channel or signal on the first cell as follows. The second DL channel or signal indicates whether the network device is to send the first DL channel or signal on at least one cell in multiple cells. The multiple cells include the first cell.

In some implementations, the second DL channel or signal indicates whether the network device is to send the first DL channel or signal on the first cell as follows. The second DL channel or signal carries first indication information. The first indication information indicates whether the network device is to send the first DL channel or signal on the first cell.

In some implementations, the second DL channel or signal is PDSCH, and the first indication information is a first MAC CE. Alternatively, the second DL channel or signal is PDCCH, and the first indication information is a first DCI.

In some implementations, the first MAC CE indicates one or more of: whether at least one cell in multiple cells is activated or deactivated, whether the first DL channel or signal is to be sent on at least one cell in the multiple cells, or an index of the first DL channel or signal to be sent on at least one cell in the multiple cells. The multiple cells include the first cell.

In some implementations, the first MAC CE corresponds to a first MAC CE format. The first MAC CE format includes a first information field and a second information field. The first information field indicates whether at least one cell in multiple cells is activated or deactivated. The second information field indicates whether the first DL channel or signal is to be sent on at least one cell in the multiple cells.

In some implementations, the first MAC CE corresponds to a second MAC CE format. The second MAC CE format includes a first information field and a second information field. The first information field indicates whether at least one cell in multiple cells is activated or deactivated. The second information field indicates whether the first DL channel or signal is to be sent on at least one activated cell in the multiple cells, and/or an index of the first DL channel or signal to be sent.

In some implementations, the second information field includes *N* rows of bits. The N rows of bits are in one-to-one correspondence with *N* activated cells. *N* is greater than or equal to 1. Each row of bits in the *N* rows of bits indicates one of: an index of the first DL channel or signal to be sent, or not sending the first DL channel or signal.

In some implementations, each row of bits in the *N* rows of bits includes *M* bits. The *M* bits are in one-to-one correspondence with indices of *M* first DL channels or signals. Each bit of the *M* bits indicates whether the network device is to send a first DL channel or signal of a corresponding index. *M* is greater than or equal to 1.

In some implementations, the first MAC CE corresponds to a third MAC CE format. The third MAC CE format includes a first information field. The first information field indicates one of: whether at least one cell in multiple cells is activated or deactivated, whether the first DL channel or signal is to be sent on at least one cell in the multiple cells, or whether at least one cell in the multiple cells is activated or deactivated, where the first DL channel or signal is to be sent on an activated cell.

In some implementations, the third MAC CE format further includes a second information field. When the second information field indicates a first value, the first information field indicates whether at least one cell in multiple cells is activated or deactivated; and/or when the second information field indicates a second value, the first information field indicates whether at least one cell in the multiple cells is activated or deactivated, where the first DL channel or signal is to be sent on an activated cell.

In some implementations, when the terminal device is not configured with second indication information or when the second indication information configured for the terminal device indicates disabling, the first information field indicates whether at least one cell in multiple cells is activated or deactivated; and/or when the terminal device is configured with second indication information or when the second indication information configured for the terminal device indicates enabling, the first information field indicates whether at least one cell in the multiple cells is activated or deactivated, where the first DL channel or signal is to be sent on an activated cell.

In some implementations, the second transceiver module 1210 is configured to send the second DL channel or signal on a second cell.

In some implementations, the second transceiver module 1210 is further configured to receive a first UL channel or signal from the terminal device. The first UL channel or signal is used to request the network device to send the first DL channel or signal on the first cell.

In some implementations, the first UL channel or signal is used to request the network device to send the first DL channel or signal on the first cell as follows. The first UL channel or signal is used to request the network device to send the first DL channel or signal on at least one cell in multiple cells. The multiple cells include the first cell.

In some implementations, a type of the first UL channel or signal includes one or more of: SRS, PUCCH, or PRACH.

In some implementations, the first UL channel or signal is used to request the network device to send the first DL channel or signal on the first cell as follows. The type of the first UL channel or signal is PUSCH. The first UL channel or signal carries a second MAC CE. The second MAC CE is used to request the network device to send the first DL channel or signal on the first cell.

In some implementations, the second transceiver module 1210 is configured to receive the first UL channel or signal on a third cell.

In some implementations, the second transceiver module 1210 is further configured to send first configuration information to the terminal device. The first configuration information is used to configure a resource of the first DL channel or signal.

In some implementations, the first configuration information is used to configure at least one of: an ID of the first cell, a first SSB set on the first cell, a time-domain position of the first SSB set, a frequency-domain position of the first SSB set, or a subcarrier spacing of an SSB on the first cell.

In some implementations, the time-domain position of the first SSB set includes at least one of: an SMTC window associated with the first SSB set, a period of the first SSB set, or an indication of a half-frame in which the first SSB set is located.

In some implementations, the frequency-domain position of the first SSB set includes an ARFCN value corresponding to the first SSB set.

In some implementations, the first configuration information is used to configure at least one of: IDs of multiple cells, SSB sets on the multiple cells, time-domain positions of the SSB sets on the multiple cells, frequency-domain positions of the SSB sets on the multiple cells, or a subcarrier spacing of SSBs on the multiple cells. The multiple cells include the first cell.

In some implementations, the second transceiver module 1210 is further configured to send second configuration information to the terminal device. The second configuration information is used to configure a resource of the second DL channel or signal.

In some implementations, the second configuration information is used to configure at least one of: a time-domain position of the second DL channel or signal, a frequency-domain position of the second DL channel or signal, a time-domain position and/or a frequency-domain position of a PDCCH scheduling the second DL channel or signal when a type of the second DL channel or signal is PDSCH, an association relationship between the first cell and the second DL channel or signal , a first timer, or a duration of the first timer.

In some implementations, the second transceiver module 1210 is further configured to send third configuration information to the terminal device. The third configuration information is used to configure a resource of the first UL channel or signal.

In some implementations, the third configuration information is used to configure at least one: a time-domain position of the first UL channel or signal, a frequency-domain position of the first UL channel or signal, a time-domain position and/or a frequency-domain position of a PDCCH scheduling the first UL channel or signal when the type of the first UL channel or signal is PUSCH, an association relationship between the first UL channel or signal and the first cell, a second timer, or a duration of the second timer.

In some implementations, a type of the first DL channel or signal includes one or more of: an SSB, SIB1, a CSI-RS, a TRS, or a PRS.

The network device 1200 in embodiments of the disclosure can implement corresponding functions of the network device in the above method embodiments. For the procedure, function, implementation, and advantage corresponding to each module (sub-module, unit, or assembly, etc.) in the network device 1200, reference can be made to the corresponding illustrations in the above method embodiments, which will not be repeated herein. It may be noted that, functions of various modules (sub-modules, units, or assemblies, etc.) in the network device 1200 in embodiments of the disclosure may be implemented by different modules (sub-modules, units, or assemblies, etc.), or may be implemented by the same module (sub-module, unit, or assembly, etc.).

FIG. 13 is a schematic structural diagram of a communication device 1300 according to embodiments of the disclosure. The communication device 1300 includes a processor 1310. The processor 1310 can invoke and execute computer programs stored in a memory to cause the communication device 1300 to implement the methods in embodiments of the disclosure.

In one implementation, the communication device 1300 may further include a memory 1320. The processor 1310 can invoke and execute computer programs stored in the memory 1320 to cause the communication device 1300 to implement the methods in embodiments of the disclosure.

The memory 1320 may be a separate device independent of the processor 1310, or may be integrated into the processor 1310.

In one implementation, the communication device 1300 may further include a transceiver 1330. The processor 1310 can control the transceiver 1330 to communicate with other devices, specifically, to send information or data to other devices or to receive information or data sent by other devices.

The transceiver 1330 may include a transmitter and a receiver. The transceiver 1330 may further include an antenna, where one or more antennas can be provided.

In one implementation, the communication device 1300 may be the network device in embodiments of the disclosure. The communication device 1300 can implement corresponding operations performed by the network device in various methods in embodiments of the disclosure, which will not be repeated herein for brevity.

In one implementation, the communication device 1300 may be the terminal device in embodiments of the disclosure. The communication device 1300 can implement corresponding operations performed by the terminal device in various methods in embodiments of the disclosure, which will not be repeated herein for brevity.

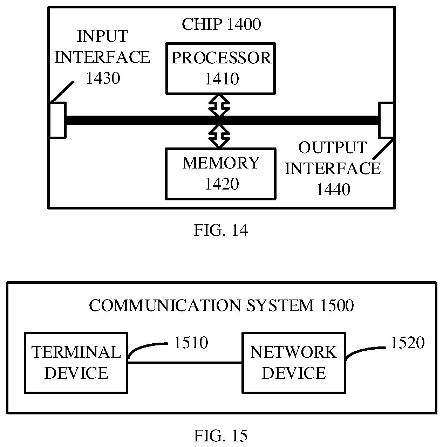

FIG. 14 is a schematic structural diagram of a chip 1400 according to an embodiment of the disclosure. The chip 1400 includes a processor 1410. The processor 1410 can invoke and execute computer programs stored in a memory to implement the methods in embodiments of the disclosure.

In one implementation, the chip 1400 may further include a memory 1420. The processor 1410 can invoke and execute computer programs stored in the memory 1420 to implement the methods performed by the terminal device or performed by the network device in embodiments of the disclosure.

The memory 1420 may be a separate device independent of the processor 1410, or may be integrated into the processor 1410.

In one implementation, the chip 1400 may further include an input interface 1430. The processor 1410 can control the input interface 1430 to communicate with other devices or chips, specifically, to obtain information or data sent by other devices or chips.

In one implementation, the chip 1400 may further include an output interface 1440. The processor 1410 can control the output interface 1440 to communicate with other devices or chips, specifically, to output information or data to other devices or chips.

In one implementation, the chip is applicable to the network device in embodiments of the disclosure. The chip can implement corresponding operations implemented by the network device in various methods in embodiments of the disclosure, which will not be repeated herein for brevity.

In one implementation, the chip is applicable to the terminal device in embodiments of the disclosure. The chip can implement corresponding operations implemented by the terminal device in various methods in embodiments of the disclosure, which will not be repeated herein for brevity.

Chips applicable to the network device and the terminal device may be the same chip or may be different chips.

It may be understood that, the chip in embodiments of the disclosure may also be referred to as a system-on-chip (SOC).

The above processor may be a general-purpose processor, a digital signal processor (DSP), a field programmable gate array (FPGA), an application specific integrated circuit (ASIC), or other programmable logic devices, transistor logic devices, discrete hardware components, etc. The above general-purpose processor may be a microprocessor, or may be any conventional processor, etc.

The above memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the above memory is by way of explanation but not limitation, for example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in embodiments of the disclosure is intended to include, but is not limited to, these and any other suitable types of memories.

FIG. 15 is a schematic block diagram of a communication system 1500 according to embodiments of the disclosure. The communication system 1500 includes a terminal device 1510 and a network device 1520.

The terminal device 1510 is configured to receive, on a first cell, a first DL channel or signal sent by the network device.

The network device 1520 is configured to send the first DL channel or signal to the terminal device on the first cell.

The terminal device 1510 may be configured to implement corresponding functions implemented by the terminal device in the above methods, and the network device 1520 may be configured to implement corresponding functions implemented by the network device in the above methods, which will not be repeated herein for brevity.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a special-purpose computer, a computer network, or another programmable apparatus. The computer instruction can be stored in a computer-readable storage medium or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like, which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It may be understood that, in various embodiments of the disclosure, the magnitude of a sequence number of each of the above processes does not mean an execution order, and an execution order of each process shall be determined according to a function and an internal logic of the process, which shall not constitute any limitation to an implementation process of embodiments of the disclosure.

It will be evident to those skilled in the art that, for the sake of convenience and simplicity, in terms of the specific working processes of the above systems, apparatuses, and units, reference can be made to the corresponding processes in the above method embodiments, which will not be repeated herein.

The above elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
receiving, on a first cell by a terminal device, a first downlink (DL) channel or signal sent by a network device.

2. The method of claim 1, further comprising:
receiving, by the terminal device, a second DL channel or signal, wherein the second DL channel or signal indicates whether the network device is to send the first DL channel or signal on the first cell.

3. The method of claim 2, wherein the second DL channel or signal indicates whether the network device is to send the first DL channel or signal on the first cell, comprising:
the second DL channel or signal indicates that the network device is to send the first DL channel or signal on the first cell; and/or
the second DL channel or signal indicates that the network device is not to send the first DL channel or signal on the first cell.

4. The method of claim 2 or 3, wherein the second DL channel or signal indicates whether the network device is to send the first DL channel or signal on the first cell, comprising:
the second DL channel or signal indicates whether the network device is to send the first DL channel or signal on at least one cell in a plurality of cells, wherein the plurality of cells comprise the first cell.

5. The method of any one of claims 2 to 4, wherein the second DL channel or signal indicates whether the network device is to send the first DL channel or signal on the first cell, comprising:
the second DL channel or signal carries first indication information, wherein the first indication information indicates whether the network device is to send the first DL channel or signal on the first cell.

6. The method of claim 5, wherein the second DL channel or signal is a physical downlink shared channel (PDSCH), and the first indication information is a first medium access control - control element (MAC CE); or
the second DL channel or signal is a physical downlink control channel (PDCCH), and the first indication information is first downlink control information (DCI).

7. The method of claim 6, wherein the first MAC CE indicates one or more of:
whether at least one cell in a plurality of cells is activated or deactivated;
whether the first DL channel or signal is to be sent on at least one cell in the plurality of cells; or
an index of the first DL channel or signal to be sent on at least one cell in the plurality of cells,
wherein the plurality of cells comprise the first cell.

8. The method of claim 7, wherein the first MAC CE corresponds to a first MAC CE format, and the first MAC CE format comprises a first information field and a second information field,
wherein the first information field indicates whether at least one cell in the plurality of cells is activated or deactivated; and
the second information field indicates whether the first DL channel or signal is to be sent on at least one cell in the plurality of cells.

9. The method of claim 7, wherein the first MAC CE corresponds to a second MAC CE format, and the second MAC CE format comprises a first information field and a second information field,
wherein the first information field indicates whether at least one cell in the plurality of cells is activated or deactivated; and
the second information field indicates whether the first DL channel or signal is to be sent on at least one activated cell in the plurality of cells, and/or an index of the first DL channel or signal to be sent.

10. The method of claim 9, wherein the second information field comprises *N* rows of bits, the *N* rows of bits are in one-to-one correspondence with *N* activated cells, *N* is greater than or equal to 1, and each row of bits in the *N* rows of bits indicates one of:
an index of the first DL channel or signal to be sent; or
not sending the first DL channel or signal.

11. The method of claim 10, wherein each row of bits in the *N* rows of bits comprises *M* bits, the *M* bits are in one-to-one correspondence with indices of *M* first DL channels or signals, each bit of the *M* bits indicates whether the network device is to send a first DL channel or signal of a corresponding index, and *M* is greater than or equal to 1.

12. The method of claim 7, wherein the first MAC CE corresponds to a third MAC CE format, the third MAC CE format comprises a first information field, and the first information field indicates one of:
whether at least one cell in the plurality of cells is activated or deactivated;
whether the first DL channel or signal is to be sent on at least one cell in the plurality of cells; or
whether at least one cell in the plurality of cells is activated or deactivated, wherein the first DL channel or signal is to be sent on an activated cell.

13. The method of claim 12, wherein the third MAC CE format further comprises a second information field,
when the second information field indicates a first value, the first information field indicates whether at least one cell in the plurality of cells is activated or deactivated; and/or
when the second information field indicates a second value, the first information field indicates whether at least one cell in the plurality of cells is activated or deactivated, wherein the first DL channel or signal is to be sent on the activated cell.

14. The method of claim 12, comprising:
wherein when the terminal device is not configured with second indication information or when the second indication information configured for the terminal device indicates disabling, the first information field indicates whether at least one cell in the plurality of cells is activated or deactivated; and/or
wherein when the terminal device is configured with second indication information or when the second indication information configured for the terminal device indicates enabling, the first information field indicates whether at least one cell in the plurality of cells is activated or deactivated, the first DL channel or signal is to be sent on the activated cell.

15. The method of any one of claims 2 to 14, further comprising:
starting or restarting, by the terminal device, a first timer.

16. The method of claim 15, wherein starting or restarting the first timer by the terminal device comprises:
starting or restarting, by the terminal device, the first timer at an end of a last symbol of the second DL channel or signal; or
starting or restarting, by the terminal device, the first timer at an end of a last symbol of a control-resource set (CORESET) to which the second DL channel or signal belongs; or
starting or restarting, by the terminal device, the first timer at a start of an effective time of a first MAC CE carried by the second DL channel or signal; or
starting or restarting, by the terminal device, the first timer after a first duration from the end of the last symbol of the second DL channel or signal; or
starting or restarting, by the terminal device, the first timer after the first duration from the end of the last symbol of the CORESET to which the second DL channel or signal belongs; or
starting or restarting, by the terminal device, the first timer after the first duration from the start of the effective time of the first MAC CE carried by the second DL channel or signal.

17. The method of claim 16, wherein the first duration is predefined, or the first duration is configured by the network device.

18. The method of any one of claims 15 to 17, wherein receiving on the first cell, by the terminal device, the first DL channel or signal sent by the network device comprises:
receiving, by the terminal device, the first DL channel or signal on the first cell within a validity duration of the first timer.

19. The method of any one of claims 15 to 18, further comprising:
receiving, by the terminal device, the second DL channel or signal after the first timer expires.

20. The method of any one of claims 2 to 19, wherein receiving the second DL channel or signal by the terminal device comprises:
receiving, by the terminal device, the second DL channel or signal on a second cell.

21. The method of any one of claims 1 to 20, wherein before receiving the first DL channel or signal on the first cell by the terminal device, the method further comprising:
sending, by the terminal device, a first uplink (UL) channel or signal, wherein the first UL channel or signal is used to request the network device to send the first DL channel or signal on the first cell.

22. The method of claim 21, wherein the first UL channel or signal is used to request the network device to send the first DL channel or signal on the first cell, comprising:
the first UL channel or signal is used to request the network device to send the first DL channel or signal on at least one cell in a plurality of cells, wherein the plurality of cells comprise the first cell.

23. The method of claim 21 or 22, wherein a type of the first UL channel or signal comprises one or more of:
a physical uplink shared channel (PUSCH);
a sounding reference signal (SRS);
a physical uplink control channel (PUCCH); or
a physical random access channel (PRACH).

24. The method of claim 21 or 22, wherein the first UL channel or signal is used to request the network device to send the first DL channel or signal on the first cell, comprising:
a type of the first UL channel or signal is a PUSCH, and the first UL channel or signal carries a second MAC CE, wherein the second MAC CE is used to request the network device to send the first DL channel or signal on the first cell.

25. The method of any one of claims 21 to 24, further comprising:
starting or restarting, by the terminal device, a second timer.

26. The method of claim 25, wherein starting or restarting the second timer by the terminal device comprises:
starting or restarting, by the terminal device, the second timer at an end of a last symbol of the first UL channel or signal; or
starting or restarting, by the terminal device, the second timer after a second duration from the end of the last symbol of the first UL channel or signal.

27. The method of claim 26, wherein the second duration is predefined, or the second duration is configured by the network device.

28. The method of any one of claims 25 to 27, further comprising:
receiving, by the terminal device, the first DL channel or signal on the first cell within a validity duration of the second timer; and/or
receiving, by the terminal device, the second DL channel or signal within the validity duration of the second timer, wherein the second DL channel or signal indicates whether the network device is to send the first DL channel or signal on the first cell.

29. The method of claim 28, further comprising one of:
sending, by the terminal device, the first UL channel or signal after the second timer expires, in case of the terminal device does not receive the first DL channel or signal within the validity duration of the second timer;
sending, by the terminal device, the first UL channel or signal after the second timer expires, in case of the terminal device does not receive the second DL channel or signal within the validity duration of the second timer; and
sending, by the terminal device, the first UL channel or signal after the second timer expires, in case of the terminal device does not receive the first DL channel or signal and does not receive the second DL channel or signal within the validity duration of the second timer.

30. The method of any one of claims 21 to 29, wherein sending the first UL channel or signal by the terminal device comprises:
sending, by the terminal device, the first UL channel or signal on a third cell.

31. The method of any one of claims 1 to 30, further comprising:
receiving, by the terminal device, first configuration information sent by the network device, wherein the first configuration information is used to configure a resource of the first DL channel or signal.

32. The method of claim 31, wherein the first configuration information is used to configure at least one of: an identity (ID) of the first cell, a first synchronization signal/physical broadcast channel (PBCH) block (SSB) set on the first cell, a time-domain position of the first SSB set, a frequency-domain position of the first SSB set, or a subcarrier spacing of an SSB on the first cell.

33. The method of claim 32, wherein the time-domain position of the first SSB set comprises at least one of: an SSB measurement timing configuration (SMTC) window associated with the first SSB set, a period of the first SSB set, or an indication of a half-frame in which the first SSB set is located.

34. The method of claim 32 or 33, wherein the frequency-domain position of the first SSB set comprises an absolute radio-frequency channel number (ARFCN) value corresponding to the first SSB set.

35. The method of claim 31, wherein the first configuration information is used to configure at least one of: IDs of a plurality of cells, SSB sets on the plurality of cells, time-domain positions of the SSB sets on the plurality of cells, frequency-domain positions of the SSB sets on the plurality of cells, or a subcarrier spacing of SSBs on the plurality of cells, wherein the plurality of cells comprise the first cell.

36. The method of any one of claims 2 to 20, further comprising:
receiving, by the terminal device, second configuration information sent by the network device, wherein the second configuration information is used to configure a resource of the second DL channel or signal.

37. The method of claim 36, wherein the second configuration information is used to configure at least one of:
a time-domain position of the second DL channel or signal;
a frequency-domain position of the second DL channel or signal;
a time-domain position and/or a frequency-domain position of a PDCCH scheduling the second DL channel or signal when a type of the second DL channel or signal is a PDSCH;
an association relationship between the first cell and the second DL channel or signal;
a first timer; or
a duration of the first timer.

38. The method of any one of claims 21 to 30, further comprising:
receiving, by the terminal device, third configuration information sent by the network device, wherein the third configuration information is used to configure a resource of the first UL channel or signal.

39. The method of claim 38, wherein the third configuration information is used to configure at least one of:
a time-domain position of the first UL channel or signal;
a frequency-domain position of the first UL channel or signal;
a time-domain position and/or a frequency-domain position of a PDCCH scheduling the first UL channel or signal when a type of the first UL channel or signal is a PUSCH;
an association relationship between the first cell and the first UL channel or signal;
a second timer; or
a duration of the second timer.

40. The method of any one of claims 1 to 39, wherein a type of the first DL channel or signal comprises one or more of: an SSB, system information block 1 (SIB1), a channel state information-reference signal (CSI-RS), a tracking reference signal (TRS), or a positioning reference signal (PRS).

41. A wireless communication method, comprising:
sending, on a first cell by a network device, a first downlink (DL) channel or signal to a terminal device.

42. The method of claim 41, further comprising:
sending, by the network device, a second DL channel or signal to the terminal device, wherein the second DL channel or signal indicates whether the network device is to send the first DL channel or signal on the first cell.

43. The method of claim 42, wherein the second DL channel or signal indicates whether the network device is to send the first DL channel or signal on the first cell, comprising:
the second DL channel or signal indicates that the network device is to send the first DL channel or signal on the first cell; and/or
the second DL channel or signal indicates that the network device is not to send the first DL channel or signal on the first cell.

44. The method of claim 42 or 43, wherein the second DL channel or signal indicates whether the network device is to send the first DL channel or signal on the first cell, comprising:
the second DL channel or signal indicates whether the network device is to send the first DL channel or signal on at least one cell in a plurality of cells, wherein the plurality of cells comprise the first cell.

45. The method of any one of claims 42 to 44, wherein the second DL channel or signal indicates whether the network device is to send the first DL channel or signal on the first cell, comprising:
the second DL channel or signal carries first indication information, wherein the first indication information indicates whether the network device is to send the first DL channel or signal on the first cell.

46. The method of claim 45, wherein the second DL channel or signal is a physical downlink shared channel (PDSCH), and the first indication information is a first medium access control - control element (MAC CE); or
the second DL channel or signal is a physical downlink control channel (PDCCH), and the first indication information is first downlink control information (DCI).

47. The method of claim 46, wherein the first MAC CE indicates one or more of:
whether at least one cell in a plurality of cells is activated or deactivated;
whether the first DL channel or signal is to be sent on at least one cell in the plurality of cells; or
an index of the first DL channel or signal to be sent on at least one cell in the plurality of cells,
wherein the plurality of cells comprise the first cell.

48. The method of claim 47, wherein the first MAC CE corresponds to a first MAC CE format, and the first MAC CE format comprises a first information field and a second information field,
wherein the first information field indicates whether at least one cell in the plurality of cells is activated or deactivated; and
the second information field indicates whether the first DL channel or signal is to be sent on at least one cell in the plurality of cells.

49. The method of claim 47, wherein the first MAC CE corresponds to a second MAC CE format, and the second MAC CE format comprises a first information field and a second information field,
wherein the first information field indicates whether at least one cell in the plurality of cells is activated or deactivated; and
the second information field indicates whether the first DL channel or signal is to be sent on at least one activated cell in the plurality of cells, and/or an index of the first DL channel or signal to be sent.

50. The method of claim 49, wherein the second information field comprises *N* rows of bits, the *N* rows of bits are in one-to-one correspondence with *N* activated cells, *N* is greater than or equal to 1, and each row of bits in the *N* rows of bits indicates one of:
an index of the first DL channel or signal to be sent; or
not sending the first DL channel or signal.

51. The method of claim 50, wherein each row of bits in the *N* rows of bits comprises *M* bits, the *M* bits are in one-to-one correspondence with indices of *M* first DL channels or signals, each bit of the *M* bits indicates whether the network device is to send a first DL channel or signal of a corresponding index, and *M* is greater than or equal to 1.

52. The method of claim 47, wherein the first MAC CE corresponds to a third MAC CE format, the third MAC CE format comprises a first information field, and the first information field indicates one of:
whether at least one cell in the plurality of cells is activated or deactivated;
whether the first DL channel or signal is to be sent on at least one cell in the plurality of cells; or
whether at least one cell in the plurality of cells is activated or deactivated, wherein the first DL channel or signal is to be sent on an activated cell.

53. The method of claim 52, wherein the third MAC CE format further comprises a second information field,
when the second information field indicates a first value, the first information field indicates whether at least one cell in the plurality of cells is activated or deactivated; and/or
when the second information field indicates a second value, the first information field indicates whether at least one cell in the plurality of cells is activated or deactivated, wherein the first DL channel or signal is to be sent on the activated cell.

54. The method of claim 52, comprising:
wherein when the terminal device is not configured with second indication information or when the second indication information configured for the terminal device indicates disabling, the first information field indicates whether at least one cell in the plurality of cells is activated or deactivated; and/or
wherein when the terminal device is configured with second indication information or when the second indication information configured for the terminal device indicates enabling, the first information field indicates whether at least one cell in the plurality of cells is activated or deactivated, wherein the first DL channel or signal is to be sent on the activated cell.

55. The method of any one of claims 42 to 54, wherein sending the second DL channel or signal to the terminal device by the network device comprises:
sending, by the network device, the second DL channel or signal on a second cell.

56. The method of any one of claims 41 to 55, wherein before sending the first DL channel or signal on the first cell by the network device, the method further comprising:
receiving, by the network device, a first uplink (UL) channel or signal from the terminal device, wherein the first UL channel or signal is used to request the network device to send the first DL channel or signal on the first cell.

57. The method of claim 56, wherein the first UL channel or signal is used to request the network device to send the first DL channel or signal on the first cell, comprising:
the first UL channel or signal is used to request the network device to send the first DL channel or signal on at least one cell in a plurality of cells, wherein the plurality of cells comprise the first cell.

58. The method of claim 56 or 57, wherein a type of the first UL channel or signal comprises one or more of:
a physical uplink shared channel (PUSCH);
a sounding reference signal (SRS);
a physical uplink control channel (PUCCH); or
a physical random access channel (PRACH).

59. The method of claim 56 or 57, wherein the first UL channel or signal is used to request the network device to send the first DL channel or signal on the first cell, comprising:
a type of the first UL channel or signal is a PUSCH, and the first UL channel or signal carries a second MAC CE, wherein the second MAC CE is used to request the network device to send the first DL channel or signal on the first cell.

60. The method of any one of claims 56 to 59, wherein receiving the first UL channel or signal from the terminal device by the network device comprises:
receiving, by the network device, the first UL channel or signal on a third cell.

61. The method of any one of claims 41 to 60, further comprising:
sending, by the network device, first configuration information to the terminal device, wherein the first configuration information is used to configure a resource of the first DL channel or signal.

62. The method of claim 61, wherein the first configuration information is used to configure at least one of: an identity (ID) of the first cell, a first synchronization signal/physical broadcast channel (PBCH) block (SSB) set on the first cell, a time-domain position of the first SSB set, a frequency-domain position of the first SSB set, or a subcarrier spacing of an SSB on the first cell.

63. The method of claim 62, wherein the time-domain position of the first SSB set comprises at least one of: an SSB measurement timing configuration (SMTC) window associated with the first SSB set, a period of the first SSB set, or an indication of a half-frame in which the first SSB set is located.

64. The method of claim 62 or 63, wherein the frequency-domain position of the first SSB set comprises an absolute radio-frequency channel number (ARFCN) value corresponding to the first SSB set.

65. The method of claim 61, wherein the first configuration information is used to configure at least one of: IDs of a plurality of cells, SSB sets on the plurality of cells, time-domain positions of the SSB sets on the plurality of cells, frequency-domain positions of the SSB sets on the plurality of cells, or a subcarrier spacing of SSBs on the plurality of cells, wherein the plurality of cells comprise the first cell.

66. The method of any one of claims 42 to 55, further comprising:
sending, by the network device, second configuration information to the terminal device, wherein the second configuration information is used to configure a resource of the second DL channel or signal.

67. The method of claim 66, wherein the second configuration information is used to configure at least one of:
a time-domain position of the second DL channel or signal;
a frequency-domain position of the second DL channel or signal;
a time-domain position and/or a frequency-domain position of a PDCCH scheduling the second DL channel or signal when a type of the second DL channel or signal is a PDSCH;
an association relationship between the first cell and the second DL channel or signal;
a first timer; or
a duration of the first timer.

68. The method of any one of claims 56 to 60, further comprising:
sending, by the network device, third configuration information to the terminal device, wherein the third configuration information is used to configure a resource of the first UL channel or signal.

69. The method of claim 68, wherein the third configuration information is used to configure at least one of:
a time-domain position of the first UL channel or signal;
a frequency-domain position of the first UL channel or signal;
a time-domain position and/or a frequency-domain position of a PDCCH scheduling the first UL channel or signal when a type of the first UL channel or signal is a PUSCH;
an association relationship between the first cell and the first UL channel or signal;
a second timer; or
a duration of the second timer.

70. The method of any one of claims 41 to 69, wherein a type of the first DL channel or signal comprises one or more of: an SSB, system information block 1 (SIB1), a channel state information-reference signal (CSI-RS), a tracking reference signal (TRS), or a positioning reference signal (PRS).

71. A terminal device, comprising:
a first transceiver module configured to receive, on a first cell, a first downlink (DL) channel or signal sent by a network device.

72. A network device, comprising:
a second transceiver module configured to send, on a first cell, a first downlink (DL) channel or signal to a terminal device.

73. A terminal device, comprising:
a transceiver, a processor, and a memory, wherein the memory is configured to store computer programs, the transceiver is configured to communicate with other devices, and the processor is configured to invoke and execute the computer programs stored in the memory, to cause the terminal device to perform the method of any one of claims 1 to 40.

74. A network device, comprising:
a transceiver, a processor, and a memory, wherein the memory is configured to store computer programs, the transceiver is configured to communicate with other devices, and the processor is configured to invoke and execute the computer programs stored in the memory, to cause the network device to perform the method of any one of claims 41 to 70.

75. A chip, comprising:
a processor configured to invoke and execute computer programs stored in a memory, to cause a device equipped with the chip to perform the method of any one of claims 1 to 40 or 41 to 70.

76. A computer-readable storage medium configured to store computer programs, wherein the computer programs, when executed by a device, are operable with the device to perform the method of any one of claims 1 to 40 or 41 to 70.

77. A computer program product comprising computer program instructions, wherein the computer program instructions are operable with a computer to perform the method of any one of claims 1 to 40 or 41 to 70.

78. A computer program, wherein the computer program is operable with a computer to perform the method of any one of claims 1 to 40 or 41 to 70.

79. A communication system, comprising:
a terminal device configured to perform the method of any one of claims 1 to 40;
a network device configured to perform the method of any one of claims 41 to 70.
